Europäisches Patentamt

European Patent Office

Office européen des brevets

(19)

(11) **EP 0 716 223 B1**

(12) **EUROPEAN PATENT SPECIFICATION**

(45) Date of publication and mention
of the grant of the patent:
**12.04.2000   Bulletin 2000/15**

(51) Int Cl.[7]: **F02D 41/26**

(21) Application number: **95119133.7**

(22) Date of filing: **05.12.1995**

(54) **Electronic apparatus**

Elektronische Vorrichtung

Appareil électronique

(84) Designated Contracting States:
**DE ES FR GB IT**

(30) Priority:  **06.12.1994   JP 30228594**

(43) Date of publication of application:
**12.06.1996   Bulletin 1996/24**

(73) Proprietor: **DENSO CORPORATION**
**Kariya-City, Aichi-Pref. (JP)**

(72) Inventors:
• **Yano, Kenzo**
  **Kariya-city, Aichi-pref. 448 (JP)**
• **Sugiura, Kengo**
  **Kariya-city, Aichi-pref. 448 (JP)**
• **Maeda, Shinichi**
  **Kariya-city, Aichi-pref. 448 (JP)**

(74) Representative:
**Winter, Brandl, Fürniss, Hübner, Röss, Kaiser,**
**Polte Partnerschaft**
**Patent- und Rechtsanwaltskanzlei**
**Alois-Steinecker-Strasse 22**
**85354 Freising (DE)**

(56) References cited:
FR-A- 2 342 600          US-A- 3 828 313
US-A- 5 218 343          US-A- 5 351 666

• PATENT ABSTRACTS OF JAPAN vol. 010, no.
146 (M-482) [2203] , 28 May 1986 & JP 61 001832
A (DIESEL KIKI KK), 7 January 1986,
• PATENT ABSTRACTS OF JAPAN vol. 006, no.
188 (P-144), 28 September 1982 & JP 57 100370
A (MATSUSHITA ELECTRIC WORKS LTD), 22
June 1982,

## Description

This invention relates to an electronic apparatus in which data is transmitted from a memory according to a serial-communication format, and control is executed in response to the transmitted data. The electronic apparatus of this invention can be used in a system for controlling diesel-engine operating conditions such as a fuel injection rate and a fuel injection timing via a fuel injection pump.

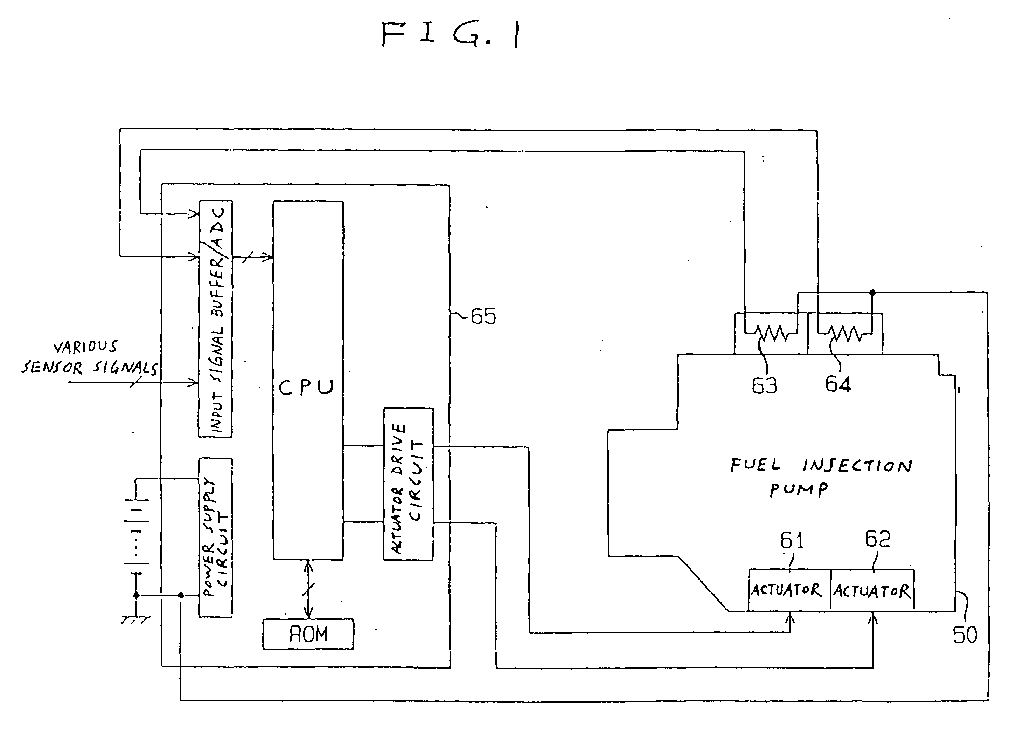

Fig. 1 shows a first prior-art control system including a fuel injection pump 50 for a diesel engine. Generally, with respect to fuel injection pumps, operating characteristics vary from pump to pump. In the prior-art control system of Fig. 1, adjustment resistors 63 and 64 are mounted on the fuel injection pump 50. The adjustment resistors 63 and 64 serve as means for compensating or correcting a deviation of operating characteristics of the fuel injection pump 50 from standard operating characteristics (or desired operating characteristics). In the prior-art control system of Fig. 1, a controller 65 separate from the fuel injection pump 50 is electrically connected to the adjustment resistors 63 and 64. The controller 65 detects a voltage drop caused by a specified adjustment resistor. The controller 65 converts the detected voltage drop into corrective data. On the other hand, the fuel injection pump 50 is provided with a fuel injection rate control actuator (a fuel injection quantity control actuator) 61 and a fuel injection timing control actuator 62. The controller 65 outputs drive signals to the actuators 61 and 62, thereby executing fuel injection rate control (fuel injection quantity control) and fuel injection timing control of the diesel engine via the fuel injection pump 50. The controller 65 uses the corrective data in the generation of the drive signals to the actuators 61 and 62.

In the prior-art control system of Fig. 1, the number of changeable parameters of correction increases in accordance with the number of adjustment resistors. The number of wiring lines between adjustment resistors and the controller 65 increases as the number of the adjustment resistors increases. Accordingly, in order to attain finely-adjustable correction, the number of adjustment resistors and also the number of related wiring lines are relatively large.

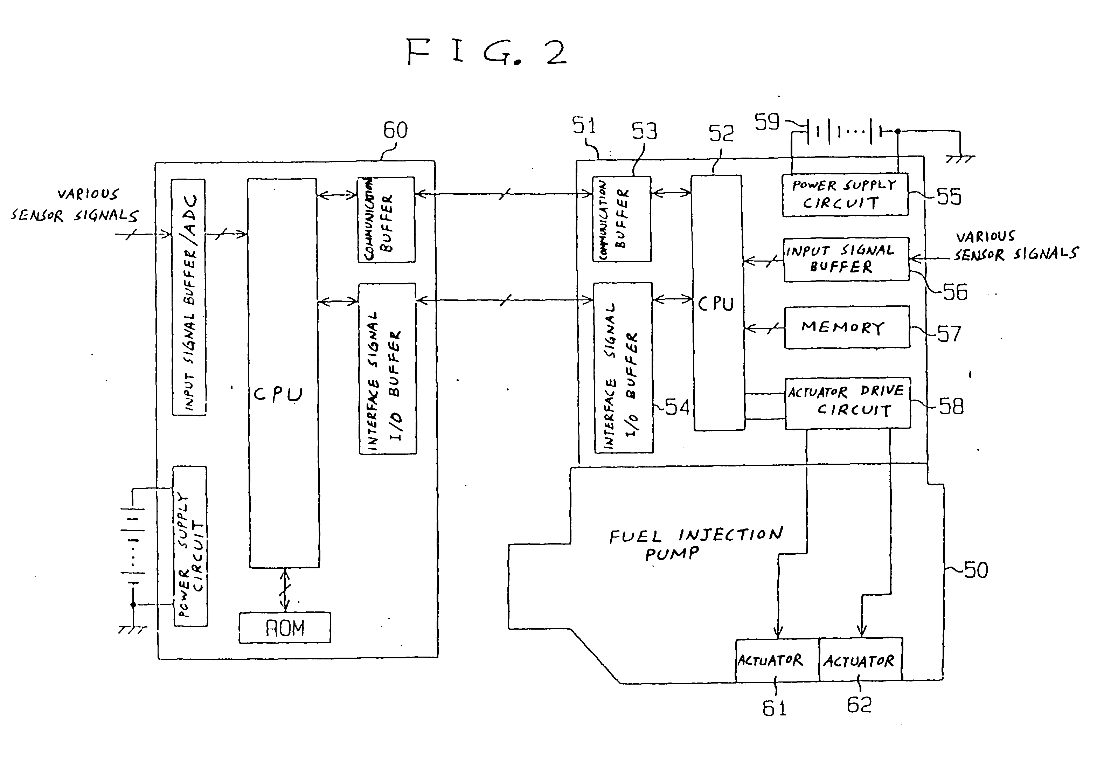

Fig. 2 shows a second prior-art control system including a fuel injection pump 50 for a diesel engine. The prior-art control system of Fig. 2 is disclosed in Japanese published unexamined patent application 61-1832. In the prior-art control system of Fig. 2, a sub controller 51 mounted on the fuel injection pump 50 includes a CPU 52, a communication buffer 53, an interface-signal input/output buffer 54, a power supply circuit 55, an input-signal buffer 56, a memory 57, and an actuator drive circuit 58. The power supply circuit 55 receives electric power from a battery 59, and feeds a drive voltage to the respective devices within the sub controller 51. The CPU 52 receives various sensor signals via the input-signal buffer 56. The CPU 52 executes data communication with a main controller 60 via the communication buffer 53. The main controller 60 is separate from the fuel injection pump 50. In addition, the CPU 52 transmits and receives interface signals to and from the main controller 60 via the interface-signal input/output buffer 54. The interface signals include signals representing flags such as a malfunction flag and an engine-start flag. The memory 57 stores corrective data for compensating or correcting a deviation of operating characteristics of the fuel injection pump 50 from standard operating characteristics (or desired operating characteristics).

In the prior-art control system of Fig. 2, the fuel injection pump 50 is provided with a fuel injection rate control actuator (a fuel injection quantity control actuator) 61 and a fuel injection timing control actuator 62 connected to the actuator drive circuit 58. The CPU 52 controls the actuator drive circuit 58 so that the actuator drive circuit 58 will output drive signals to the actuators 61 and 62. Thereby, the CPU 52 enables fuel injection rate control (fuel injection quantity control) and fuel injection timing control of the diesel engine via the actuator drive circuit 58 and the fuel injection pump 50. The CPU 52 accesses the memory 57 and causes the corrective data to be used in the generation of the drive signals to the actuators 61 and 62.

Regarding fuel injection pumps, operating characteristics vary from pump to pump as previously described. The variations in operating characteristics among pumps are caused by errors in sizes of parts of pumps, inaccuracies in assembly of pump parts, errors in response characteristics of fuel injection rate control actuators and fuel injection timing control actuators, and errors in characteristics of various sensors mounted on pumps. In accordance with such variations in operating characteristics among pumps, the operating characteristics of the fuel injection pump 50 generally deviate from standard operating characteristics (or desired operating characteristics) related to fuel injection rate control and fuel injection timing control. The corrective data in the memory 57 is preset so as to compensate or correct the deviation of the operating characteristics of the fuel injection pump 50 from the standard operating characteristics (or the desired operating characteristics). Accordingly, the accuracies of the fuel injection rate control and the fuel injection timing control are maintained within an allowable range.

In the prior-art control system of Fig. 2, since the sub controller 51 is mounted on the fuel injection pump 50, the sub controller 51 tends to be exposed to hard conditions related to factors such as temperature and vibration. Thus, it is desirable to reduce the number of parts of the sub controller 51. However, in fact, the sub controller 51 has a relatively large circuit scale since the CPU 52, the communication buffer 53, the interface-signal input/output buffer 54, the power supply circuit 54, the input-signal buffer 56, the memory 57, and the actuator drive circuit 58 are provided therein. Accordingly, in the prior-art control system of Fig. 2, the sub controller 51 tends to be unreliable. Further, the structure of the prior-art control system of Fig. 2 tends to be complicated since the sub controller 51 and the main controller 60 contain CPU's respectively.

From US-A-3 828 313 there is known to use a line for a clock signal and power and another line for serial data transmission between a central processor and a remote electronic apparatus. The remote electronic apparatus receives power through the clock signal line before it sends data to the central processor.

It is an object of this invention to provide a simple electronic apparatus.

It is another object of this invention to provide an electronic apparatus capable of optimizing data transmission.

This objects are solved by the subject matter of claim 1.

Further advantageous modifications of this invention are subject matter of the dependent claims.

In the drawings:

Fig. 1 is a diagram of a first prior-art control system.

Fig. 2 is a diagram of a second prior-art control system.

Fig. 3 is a diagram of a first control system for elucidating the subject matter of this invention.

Fig. 4 is a diagram of data pieces stored in an OTPROM in Fig. 3.

Fig. 5 is a flowchart of a segment of a program for controlling a CPU in Fig. 3.

Fig. 6 is a time-domain diagram of various signals and variables in the control system of Fig. 3.

Fig. 7 is a time-domain diagram of a clock signal and a voltage across a capacitor in the control system of Fig. 3.

Figs. 8 and 9 are a flowchart of a segment of the program for controlling the CPU in Fig. 3.

Fig. 10 is a flow diagram of a portion of operation of the CPU in Fig. 3 which relates to fuel injection rate control.

Fig. 11 is a diagram of a portion of a second control system for elucidating the subject matter of this invention.

Fig. 12 is a diagram of data pieces stored in an OTPROM in a control system according to a first embodiment of this invention.

Fig. 13 is a flowchart of a segment of a program for controlling a CPU in the control system according to the first embodiment of this invention.

Fig. 14 is a time-domain diagram of various signals and variables in the control system according to the first embodiment of this invention.

Fig. 15 is a flowchart of a segment of the program for controlling the CPU in the control system according to the first embodiment of this invention.

Fig. 16 is a flowchart of a segment of a program for controlling a CPU in a third control system for elucidating the subject matter of this invention.

Fig. 17 is a time-domain diagram of various signals and variables in the third control system for elucidating the subject matter of this invention.

Fig. 18 is a diagram of a control system according to a second embodiment of this invention.

Fig. 19 is a flowchart of a segment of a program for controlling a CPU in Fig. 18.

Hereinafter, a first control system for elucidating the subject matter of the present invention, which is, however, as such not part of the present invention will be described.

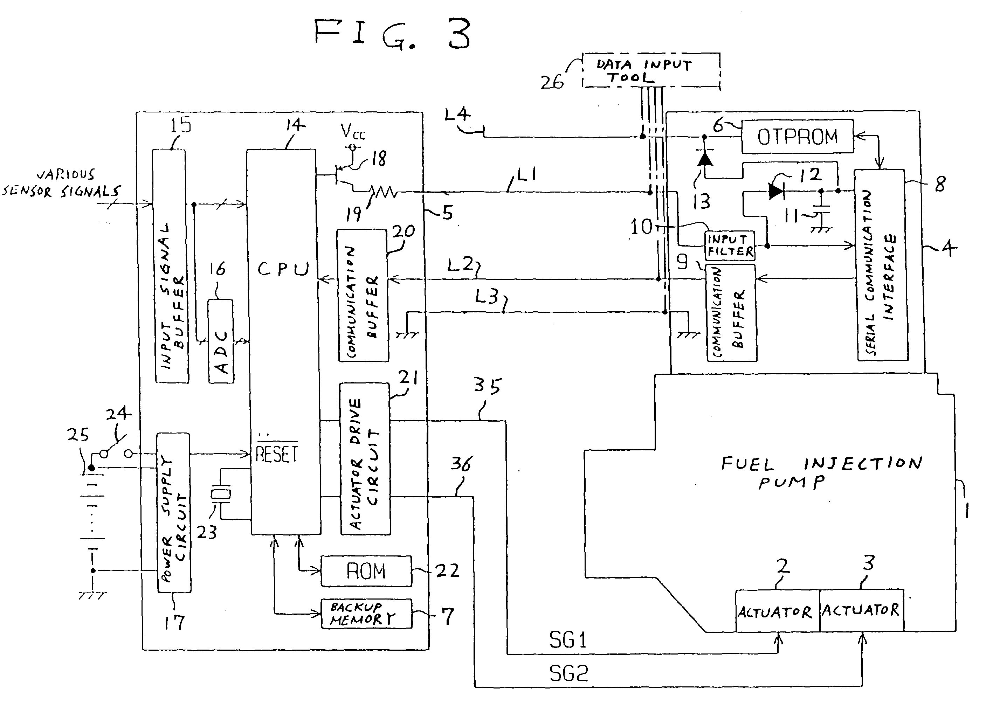

With reference to Fig. 3, a fuel injection pump 1 operates on a diesel engine for an automotive vehicle. Specifically, the fuel injection pump 1 serves to supply fuel to the diesel engine. The fuel injection pump 1 is provided with a fuel injection rate control actuator (a fuel injection quantity control actuator) 2 and a fuel injection timing control actuator 3. The actuators 2 and 3 are of an electrically-driven type.

A control system for the fuel injection pump 1 includes a sub controller 4 and a main controller 5. The sub controller 4 is mounted on the fuel injection pump 1. The main controller 5 is separate from the fuel injection pump 1. The main controller 5 includes a packaged electronic control unit (ECU).

The sub controller 4 and the main controller 5 are designed to enable serial communication of a given format therebetween. The serial communication is of a clock-based synchronization type. The sub controller 4 includes a memory 6 storing corrective data in advance. The memory 6 is, for example, an OTPROM (an one time programmable read only memory). The corrective data can be transmitted from the sub controller 4 to the main controller 5 before being stored into a backup memory 7 within the main controller 5. The fuel injection rate control actuator 2 and the fuel injection timing control actuator 3 are driven and controlled by the main controller 5 in response to the corrective data.

The sub controller 4 includes the OTPROM 6, a serial-communication interface 8, a communication buffer 9, an input filter 10, a capacitor 11, and diodes 12 and 13. The OTPROM 6 serves as memory means. The serial-communication interface 8 serves as data transmitting means. The communication buffer 9 executes signal-level conversion or impedance conversion. The input filter 10 includes a noise filter. The capacitor 11 serves as a power supply. The diodes 12 and 13 serve to block reverse-direction currents. The OTPROM 6 is a writable nonvolatile memory. The OTPROM 6 stores corrective information or corrective data depending on a deviation of operating characteristics of the fuel injection pump 1 from standard operating characteristics (or desired operating characteristics).

In a factory, the fuel injection pump 1 is checked before the shipment thereof. During the check, operating characteristics of the fuel injection pump 1 are measured while the fuel injection pump 1 is actually operated. A calculation is made as to a deviation of the measured operating characteristics of the fuel injection pump 1 from standard operating characteristics (or desired operating characteristics). Corrective data is generated which corresponds to the calculated deviation. The corrective data is written into the OTPROM 6. Although the OTPROM 6 continues to store the corrective data without receiving external electric power, accessing the OTPROM 6 requires external electric power.

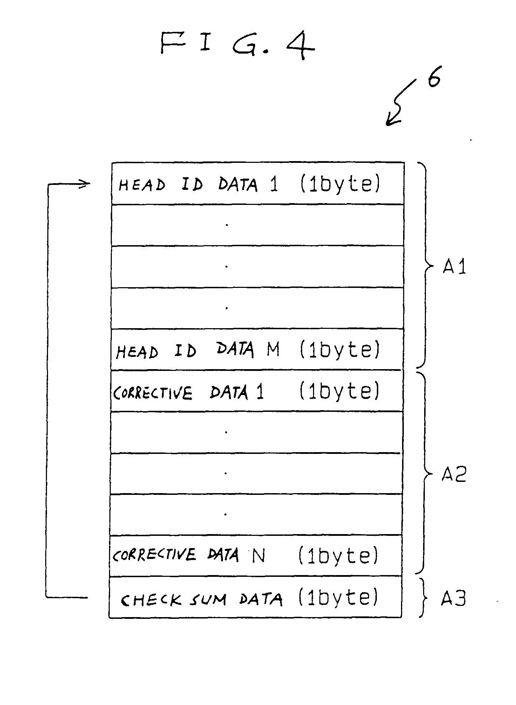

As shown in Fig. 4, the OTPROM 6 has storage areas A1, A2, and A3. The storage area A1 holds a head identification data piece "1", a head identification data piece "2", ⋯, and a head identification data piece "M" each having one byte, where "M" denotes a predetermined natural number. The storage area A2 holds a corrective data piece "1", a corrective data piece "2", ⋯, and a corrective data piece "N" each having one byte, where "N" denotes a predetermined natural number. The storage area A3 holds 1-byte check sum information (a 1-byte check sum data piece) for the corrective data. Specifically, the 1-byte check sum data piece agrees with 8 lower bits of the result of addition of all the corrective data pieces.

As previously described, the sub controller 4 is mounted on the fuel injection pump 1. The sub controller 4 and the fuel injection pump 1 are managed as a single device. When the fuel injection pump 1 is replaced by another, the sub controller 4 is also replaced by another. It is unnecessary to readjust the main controller 5 even if the fuel injection pump 1 and the sub controller 4 are replaced by new ones.

It should be noted that the OTPROM 6 may be replaced by another type of a nonvolatile memory such as an EPROM (an electrically programmable read only memory) or an EEPROM (an electrically erasable and programmable read only memory).

The main controller 5 executes various calculations related to control of the fuel injection pump 1. The main controller 5 includes a CPU 14, an input-signal buffer 15, an analog-to-digital conversion (ADC) 16, a power supply circuit 17, a PNP transistor 18, a resistor 19, a communication buffer 20, an actuator drive circuit 21, a ROM 22, and the backup memory 7. When an engine key switch 24 is closed or moved to an on position, the power supply circuit 17 receives electric power from a battery 25. The power supply circuit 17 feeds a drive voltage to the respective devices or circuits within the main controller 5. The CPU 14 operates in accordance with a program stored in the ROM 22 or an internal ROM. The CPU 14 receives various digital-type sensor signals via the input-signal buffer 15. Various analog-type sensor signals are transmitted via the input-signal buffer 15 to the analog-to-digital converter 16 before being converted to digital versions thereby. The CPU 14 receives the digital versions of the sensor signals from the analog-to-digital converter 16. The digital-type sensor signals and the analog-type sensor signals include an output signal of an accelerator open degree sensor, an output signal of an engine speed sensor (an engine crank angle sensor), an output signal of an intake air pressure sensor, an output signal of an intake air temperature sensor, and an output signal of an engine coolant temperature sensor.

The ROM 22 stores reference data or basic data depending on the type of the diesel engine. The basic data agrees with reference control data corresponding to the absence of a variation among operating characteristics of fuel injection pumps. Accordingly, the ROM 22 serves as a memory for storing central-value control data (reference control data or basic control data). It should be noted that the ROM 22 may be replaced by a ROM within the CPU 14.

Even when the engine key switch 24 is opened or moved to an off position, the backup memory 7 continues to receive electric power from the battery 25 and hence remains storing data therein. The backup memory 7 includes a writable memory. As previously described, the backup memory 7 is loaded with the corrective data transmitted from the OTPROM 6 in the sub controller 4. The backup memory 7 remains storing the corrective data during operation of the diesel engine. The backup memory 7 remains storing the corrective data also when the engine key switch 24 is moved to its off position. This design of the backup memory 7 is to minimize the frequency of the execution of corrective-data transmission from the sub controller 4 to the main controller 5. It is understood from the previous description that the backup memory 7 serves as a memory for storing the corrective data. It should be noted that the backup memory 7 may be replaced by a memory within the CPU 14 or another type of a nonvolatile and electrically programmable memory such as an EEPROM or a flash memory.

The main controller 5 and the sub controller 4 are connected by signal lines L1, L2, and L3 for communication. In the main controller 5, a positive power supply voltage Vcc (for example, 5 volts) is applied to the emitter of the PNP transistor 18. The base of the PNP transistor 18 is connected to the CPU 14. The collector of the PNP transistor 18 is connected to a first end of the capacitor 11 within the sub controller 4 via the resistor 19, the signal line L1, the input filter 10, and the diode 12. A second end of the capacitor 11 is grounded (that is, connected to the negative power supply terminal). The signal line L1 is connected to the serial-communication interface 8 within the sub controller 4 via the input filter 10. In the sub controller 4, the first end of the capacitor 11 is connected to the OTPROM 6 via the diode 13. Also, the first end of the capacitor 11 is connected to the serial-communication interface 8. In the main controller 5, the CPU 14 outputs a control signal to the base of the PNP transistor 18. The PNP transistor 18 changes between an on state (a conductive state) and an off state (a non-conductive state) in response to the control signal, transmitting a pulse signal (a clock signal) to the sub controller 4 via the signal line L1. The pulse signal changes between an L level (a ground potential) and an H level (approximately equal to the positive power supply voltage Vcc, 5 volts). The pulse signal travels to the serial-communication interface 8 within the sub controller 4 via the input filter 10. The input filter 10 removes noise from the pulse signal. The serial-communication interface 8 uses the pulse signal as a clock signal. The pulse signal transmitted to the sub controller 4 via the signal line L1 provides electric energy for activating the OTPROM 6 and the serial-communication interface 8. Specifically, the pulse signal reaches the capacitor 11 via the input filter 10 and the diode 12, and electric energy of the pulse signal is stored into the capacitor 11. The electric energy is fed from the capacitor 11 to the OTPROM 6 via the diode 13, thereby powering the OTPROM 6. The electric energy is fed from the capacitor 11 to the serial-communication serial-communication interface 8, thereby powering the interface 8.

The serial-communication interface 8 within the sub controller 4 is connected to the CPU 14 within the main controller 5 via the communication buffer 9, the signal line L2, and the communication buffer 20. The signal line L3 serves as a ground line. One end of the ground line L3 is grounded in the sub controller 4 while the other end of the ground line L3 is grounded in the main controller 5. The ground line L3 equalizes ground potentials at the sub controller 4 and the main controller 5. In other words, the ground line L3 provides a common reference ground voltage to both the sub controller 4 and the main controller 5. In the absence of a problem caused by a variation in the ground potential, the ground line L3 may be omitted while ground terminals of the sub controller 4 and the main controller 5 are connected to each other via the body of the fuel injection pump 1.

During data communication in normal control of the fuel injection pump 1, the corrective data can be transmitted from the OTPROM 6 within the sub controller 4 to the main controller 5 via connection using only the three signal lines L1, L2, and L3. A write signal line L4 is connected to the OTPROM 6 within the sub controller 4. The write signal line L4 is used only when corrective data is written into the OTPROM 6 or the corrective data in the OTPROM 6 is updated. In general, the writing of the corrective data or the updating of the corrective data is executed in a factory before the shipment of the fuel injection pump 1 with the sub controller 4. The writing of the corrective data or the updating of the corrective data may be executed after the shipment of the fuel injection pump 1 with the sub controller 4. Specifically, the writing of the corrective data or the updating of the corrective data is executed as follows. A data input tool 26 is connected to the signal lines L1, L2, L3, and L4. A write voltage is applied to the signal line L4. The write voltage is transmitted to the OTPROM 6 via the signal line L4. The OTPROM 6 falls into a data writable state in response to the write voltage. Then, corrective data is applied to the signal line L2. The corrective data is transmitted to the OTPROM 6 via the communication buffer 9 and the serial-communication interface 8 before being written into the OTPROM 6. It should be noted that an input signal line for feeding corrective data to the OTPROM 6 may be provided separately from the signal line L2.

During communication between the sub controller 4 and the main controller 5, the main controller 5 outputs a clock signal to the sub controller 4. In addition, the corrective data is outputted to the signal line L2 from the OTPROM 6 via the serial-communication interface 8 and the communication buffer 9 bit by bit in synchronism with the clock signal. Thus, serial data communication of the clock-based synchronization type is executed. As long as the serial-communication interface 8 is supplied with electric energy and the clock signal, the serial-communication interface 8 operates to repetitively transmit the corrective data from the OTPROM 6. Specifically, the head identification data pieces, the corrective data pieces, and the check sum data piece are sequentially transmitted via the serial-communication interface 8. The sequential transmission of the head identification data pieces, the corrective data pieces, and the check sum data piece continues to be repeated.

The actuator drive circuit 21 in the main controller 5 is connected to the fuel injection rate control actuator 2 on the fuel injection pump 1 via a drive line 35. Also, the actuator drive circuit 21 is connected to the fuel injection timing control actuator 3 on the fuel injection pump 1 via a drive line 36.

As previously described, the ROM 22 in the main controller 5 stores reference data or basic data depending on the type of the diesel engine. The basic data agrees with reference control data corresponding to the absence of a variation among operating characteristics of fuel injection pumps. The CPU 14 in the main controller 5 accesses the ROM 22, and executes calculations using the basic data in response to information represented by the various sensor signals. The CPU 14 determines a desired fuel injection rate (a desired fuel injection quantity) and a desired fuel injection timing on the basis of the results of the calculations. The desired fuel injection rate and the desired fuel injection timing depend on operating conditions of the diesel engine which are represented by the various sensor signals. The CPU 14 controls the actuator drive circuit 21 in response to the desired fuel injection rate and the desired fuel injection timing. The actuator drive circuit 21 generates drive signals SG1 and SG2 depending on the desired fuel injection rate and the desired fuel injection timing respectively. The actuator drive circuit 21 feeds the drive signals SG1 and SG2 to the fuel injection rate control actuator 2 and the fuel injection timing control actuator 3 via the drive lines 35 and 36 respectively. The fuel injection rate control actuator 2 is controlled by the drive signal SG1 so that the actual fuel injection rate can agree with the desired fuel injection rate. The fuel injection timing control actuator 3 is controlled by the drive signal SG2 so that the actual fuel injection timing can agree with the desired fuel injection timing.

Regarding fuel injection pumps, operating characteristics vary from pump to pump. The variations in operating characteristics among pumps are caused by errors in sizes of parts of pumps, inaccuracies in assembly of pump parts, errors in response characteristics of fuel injection rate control actuators (fuel injection quantity control actuators) and fuel injection timing control actuators, and errors in characteristics of various sensors mounted on pumps. In accordance with such variations in operating characteristics among pumps, the operating characteristics of the fuel injection pump 1 generally deviate from standard operating characteristics (or desired operating characteristics) related to fuel injection rate control (fuel injection quantity control) and fuel injection timing control. The corrective data in the OTPROM 6 within the sub controller 4 is preset so as to compensate or correct the deviation of the operating characteristics of the fuel injection pump 1 from the standard operating characteristics (or the desired operating characteristics). As previously described, the corrective data is transmitted from the OTPROM 6 within the sub controller 4 to the backup memory 7 within the main controller 5. In the main controller 5, the CPU 14 reads out the corrective data from the backup memory 7, and corrects the results of the calculations using the basic data in accordance with the corrective data. As a result, the drive signals SG1 and SG2 to the fuel injection rate control actuator 2 and the fuel injection timing control actuator 3 depend on the corrective data. In other words, the drive signals SG1 and SG2 undergo correction responsive to the corrective data. Accordingly, the accuracies of the fuel injection rate control and the fuel injection timing control are maintained within an allowable range. In this way, the CPU 14 enables drive and control of the fuel injection rate control actuator 2 and the fuel injection timing control actuator 3 of the fuel injection pump 1 in response to the corrective information related to the deviation of the operating characteristics of the fuel injection pump 1 from the standard operating characteristics (or the desired operating characteristics).

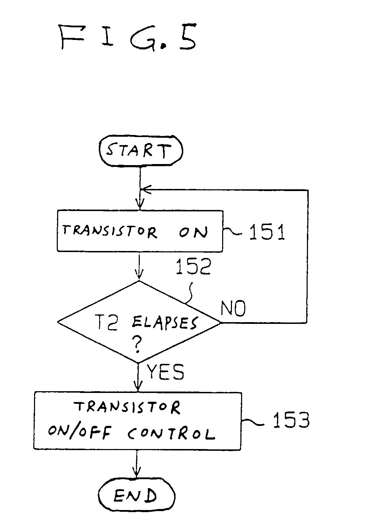

The CPU 14 operates in accordance with a program stored in the ROM 22 or an internal ROM. The program has various segments or routines. Fig. 5 is a flowchart of a segment of the program which relates to control of the PNP transistor 18. The program segment of Fig. 5 is executed once in response to change of the engine key switch 24 to its on position.

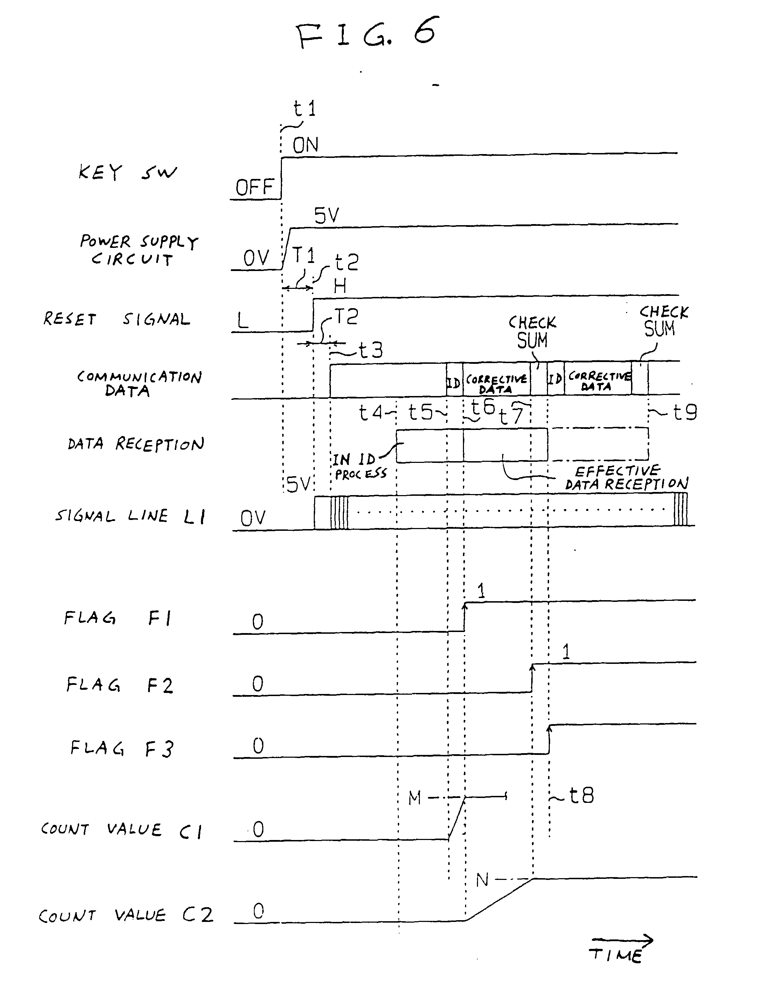

When the engine key switch 24 is changed to its on position at a moment t1 of Fig. 6, the power supply circuit 17 starts to be fed with electric power from the battery 25. At a moment t2 of Fig. 6 which follows the moment t1 by a time interval T1, the power supply circuit 17 outputs a reset signal (a trigger signal) to the CPU 14. The CPU 14 is started by the reset signal (the trigger signal). Accordingly, the program segment of Fig. 5 is started.

As shown in Fig. 5, a first step 151 of the program segment turns on the PNP transistor 18. When the PNP transistor 18 is turned on, the capacitor 11 starts to be charged by a current transmitted via the PNP transistor 18, the resistor 19, the signal line L1, the input filter 10, and the diode 12.

A step 152 following the step 151 determines whether or not a preset time T2 has elapsed since the moment of the first execution of the step 151. In the case where the preset time T2 has not yet elapsed, the program returns from the step 152 to the step 151. In the case where the preset time T2 has elapsed, the program advances from the step 152 to a step 153. The moment at which the preset time T2 has elapsed is denoted by t3 in Fig. 6.

The step 153 periodically changes the PNP transistor 18 between its on state and its off state at a predetermined frequency. As a result, a clock signal having the predetermined frequency is transmitted from the main controller 5 to the sub controller 4 via the signal line L1. The predetermined frequency is provided by an quartz oscillator 23 (see Fig. 3) connected to the CPU 14. After the step 153, the execution of the program segment ends.

During the preset time T2, the capacitor 11 continues to be charged. The preset time T2 is chosen so that the charging of the capacitor 11 can be completed before or at the end thereof. During the preset time T2, flags and counters (count values) related to communication are initialized in the main controller 5.

The capacitor 11 is periodically charged by the clock signal transmitted from the main controller 5. As a result, the voltage across the capacitor 11 periodically varies. The capacitor 11 and the clock signal are designed so that during the variation, the voltage across the capacitor 11 remains equal to or higher than a lower limit of a voltage necessary to operate the devices or the circuits (the OTPROM 6 and the serial-communication interface 8) within the sub controller 4.

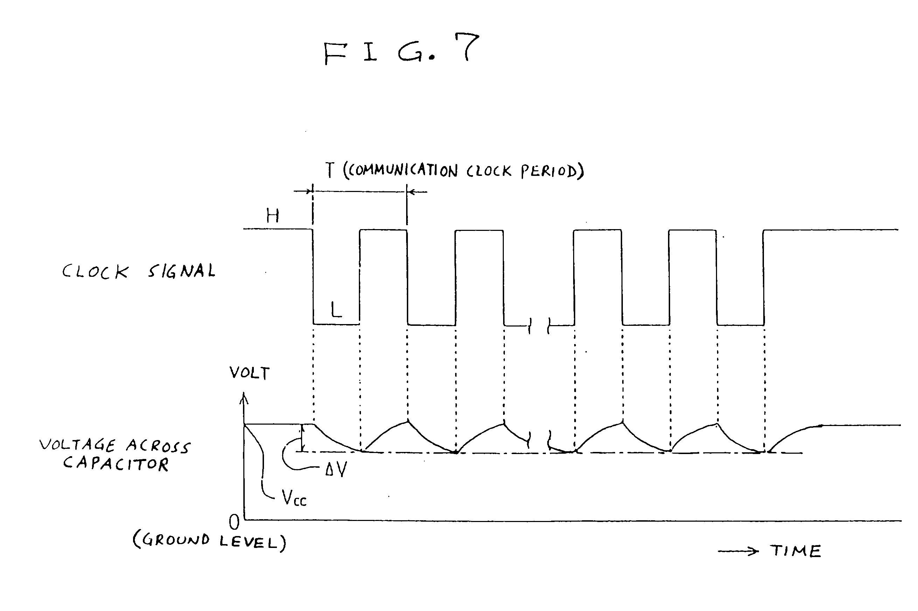

The clock signal transmitted from the main controller 5 to the sub controller 4 has a waveform such as shown in Fig. 7. The period of the clock signal is equal to, for example, 20 μs. In Fig. 7, the character ΔV denotes an allowable voltage variation width with respect to the operation power supply voltage for the devices or the circuits within the sub controller 4. The allowable voltage variation width ΔV is equal to, for example, 0.5 volts. The operation power supply voltage for the devices or the circuits within the sub controller 4 is equal to, for example, about 5 volts.

As shown in Fig. 7, the capacitor 11 is charged and hence the voltage across the capacitor 11 increases while the clock signal remains in an H level state. It should be noted that the capacitor charging current provided by the clock signal is greater than the sum of drive currents fed from the capacitor 11 to the devices or the circuits within the sub controller 4. The capacitor 11 is not charged and the voltage across the capacitor 11 decreases while the clock signal remains in an L level state. The decrease in the capacitor voltage is caused by the feed of the drive currents from the capacitor 11 to the devices or the circuits within the sub controller 4. During every period where the clock signal is in the L level state, the voltage across the capacitor 11 remains higher than the lower limit of the allowable voltage. As previously described, during the preset time T2 which precedes an interval for communication, the capacitor 11 is fully charged. During the communication, the capacitor 11 is periodically charged in response to the clock signal transmitted from the main controller 5.

The capacitance of the capacitor 11 is chosen in view of the period of the transmitted clock signal and the magnitude of the current consumed by the sub controller 4. There is the following relation among various parameters.

$$Vcc \cdot exp(-T/2R_L \cdot C) = Vcc - \Delta V \qquad (1)$$

where $R_L$ denotes a load impedance [$\Omega$] of the sub controller 4; C denotes the capacitance [F] of the capacitor 11; Vcc denotes the operation power supply voltage [V] for the sub controller 4; $\Delta V$ denotes the allowable voltage variation width [V] with respect to the operation power supply voltage Vcc; and T denotes the period [sec] of the transmitted clock signal. The equation (1) is transformed into the following equation.

$$C = -T/\{2R_L \cdot \ell n(1 - \Delta V/Vcc)\} \qquad (2)$$

In the case where $R_L$ = 250 [$\Omega$]; Vcc = 5 [V]; $\Delta V$ = 0.5 [V]; and T = 20 [$\mu$s], the equation (2) determines the capacitance C as follows.

$$C = -20 \cdot 10^{-6}/\{2 \cdot 250 \cdot \ell n(1 - 0.5/5)\}$$

$$= 3.8 \cdot 10^{-7} \ [F] \qquad (3)$$

Thus, a relatively small capacitance suffices, and a small-size capacitor can be used as the capacitor 11. It should be noted that the previously-indicated calculation of the capacitance C disregards voltage drops caused by the PNP transistor 18, the resistor 19, the signal line L1, the input filter 10, and the diode 12.

As previously described, the sub controller 4 includes the OTPROM 6, the serial-communication interface 8, the communication buffer 9, the capacitor 11, and the diodes 12 and 13. The OTPROM 6 stores the corrective data related to the deviation of the operating characteristics of the fuel injection pump 1 from the standard operating characteristics (the desired operating characteristics). The serial-communication interface 8 serves to transmit the corrective data from the OTPROM 6 to the main controller 5 via the communication buffer 9 and the signal line L2. The capacitor 11 stores electric power fed from the main controller 5 via the signal line L1, and activates the devices or the circuits within the sub controller 4 by the stored electric power. On the other hand, the main controller 5 includes the CPU 14 which operates for the control of the fuel injection rate control actuator 2 and the fuel injection timing control actuator 3 of the fuel injection pump 1 in response to the corrective data transmitted from the sub controller 4.

Since the sub controller 4 is mounted on the fuel injection pump 1, the sub controller 4 tends to be exposed to hard conditions related to factors such as temperature and vibration. Only the OTPROM 6, the serial-communication interface 8, the communication buffer 9, the capacitor 11, and the diodes 12 and 13 compose the sub controller 4. Thus, the sub controller 4 is simple in structure. The simple structure of the sub controller 4 is advantageous in maintaining the reliability of its operation and also preventing the occurrence of a damage due to the exposure to the hard conditions. Accordingly, the control system of Fig. 3 is better than the prior-art control system of Fig. 2. Further, the control system of Fig. 3 is advantageous over the prior-art control system of Fig. 1 in that many corrective information pieces can be prepared and handled by the OTPROM 6 and the serial communication.

As previously described, the serial communication between the sub controller 4 and the main controller 5 is of the clock-based synchronization type. Since the clock signal used in the sub controller 4 is transmitted from the main controller 5, it is unnecessary to provide a clock signal generator in the sub controller 4. This design enables a simple structure of the sub controller 4. In the sub controller 4, the diodes 12 and 13 block unwanted currents from the capacitor 11.

It should be noted that instead of the signal line L1, the signal line L2 may be used in transmitting electric power (a capacitor charging current) from the main controller 5 to the sub controller 4. An additional signal line may be provided to transmit electric power from the main controller 5 to the sub controller 4.

It should be noted that the serial communication between the sub controller 4 and the main controller 5 may be of an asynchronous type. In this case, a clock signal generator is provided in the sub controller 4.

As previously described, the clock signal is transmitted from the main controller 5 to the sub controller 4. The serial-communication interface 8 within the sub controller 4 operates to repetitively transmit the corrective data from the OTPROM 6 in response to the clock signal. Specifically, the head identification data pieces, the corrective data pieces, and the check sum data piece are sequentially transmitted via the serial-communication interface 8. The sequential transmission of the head identification data pieces, the corrective data pieces, and the check sum data piece continues to be repeated. The serial-form data including the corrective data is transmitted from the sub controller 4 to the main controller 5 via the signal line L2.

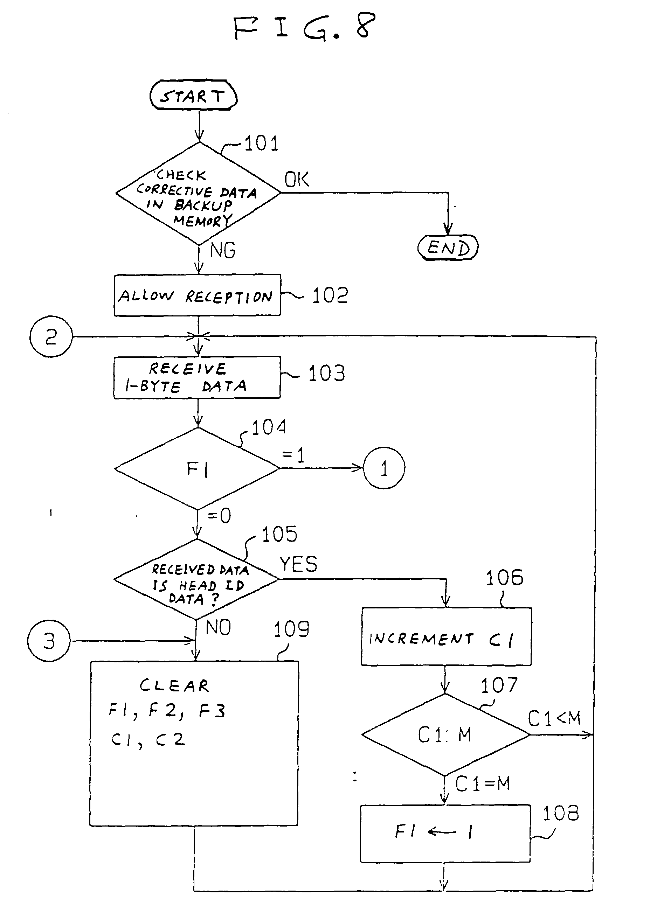

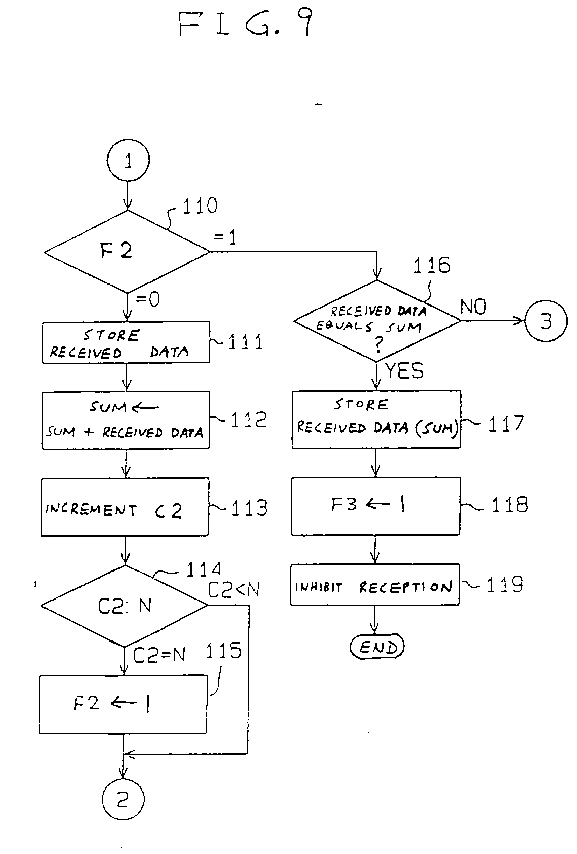

Figs. 8 and 9 are a flowchart of a segment of the program for controlling the CPU 14 within the main controller 5. The program segment of Figs. 8 and 9 relates to the serial communication between the sub controller 4 and the main controller 5. The program segment of Figs. 8 and 9 is started at a moment t4 in Fig. 6.

As shown in Fig. 8, a first step 101 of the program segment determines whether or not a check code related to data in the backup memory 7 is normal. The check code indicates whether or not the data in the backup memory 7 is effective. The determination regarding the check code is executed by, for example, sum check or mirror check. When the check code is normal, the program exits from the step 101 and then the current execution cycle of the program segment ends. Thus, it is possible to reduce the frequency of the execution of the serial communication. When the check code is not normal, the program advances from the step 101 to a step 102.

The step 102 provides an allowance for data reception. After the step 102, the program advances to a step 103. The step 103 receives a 1-byte data piece from the sub controller 4. The step 103 may subject the received 1-byte data piece to error check related to parity, framing, or overrun.

A step 104 following the step 103 determines whether a flag F1 is "1" or "0". When the flag F1 is "0", the program advances from the step 104 to a step 105. When the flag F1 is "1", the program advances from the step 104 to a step 110 of Fig. 9. The flag F1 being "1" indicates the completion of reception of all the head identification data pieces. On the other hand, the flag F1 being "0" indicates the non-completion of reception of all the head identification data pieces. Since the flag F1 is previously set to "0" by an initializing process, the flag F1 is "0" at the first execution of the step 104. Therefore, after the first execution of the step 104, the program advances to the step 105 rather than the step 110.

The step 105 determines whether or not the received 1-byte data piece agrees with a head identification data piece. When the received 1-byte data piece agrees with a head identification data piece, the program advances from the step 105 to a step 106. Otherwise, the program advances from the step 105 to a step 109. The step 106 increments a count number C1 by "1". The count number C1 is used as a counter for the number of received head identification data pieces. The count number C1 is previously set to "0" by the initializing process. The moment of the first advance of the program from the step 105 to the step 106 corresponds to a moment t5 in Fig. 6. A step 107 following the step 106 compares the count number C1 with a given number M equal to the total number of the head identification data pieces. When the count number C1 is smaller than the given number M, the program returns from the step 107 to the step 103. When the count number C1 is equal to the given number M, the program advances from the step 107 to a step 108 which sets the flag F1 to "1". The moment of the advance of the program from the step 107 to the step 108 corresponds to a moment t6 in Fig. 6.

The sequence of the steps 103, 104, 105, 106, and 107 is reiterated until the count number C1 reaches the given number M. When the count number C1 reaches the given number M, that is, when the reception of all the head identification data pieces has been completed, the program advances from the step 107 to the step 108 so that the flag F1 is set to "1". After the step 108, the program returns to the step 103.

When the main controller 5 fails to successfully receive all the head identification data pieces due to the occurrence of a malfunction, the program advances from the step 105 to the step 109. The step 109 of Fig. 8 clears the flag F1, flags F2 and F3, the count number C1, and a count number C2 to "0". After the step 109, the program returns to the step 103. As a result, the previously-mentioned processes of receiving all the head identification data pieces are re-executed.

The step 110 of Fig. 9 determines whether a flag F2 is "1" or "0". When the flag F2 is "0", the program advances from the step 110 to a step 111. When the flag F2 is "1", the program advances from the step 110 to a step 116. The flag F2 being "1" indicates the completion of reception of all the corrective data pieces. On the other hand, the flag F2 being "0" indicates the non-completion of reception of all the corrective data pieces. Since the flag F2 is previously set to "0" by the initializing process, the flag F2 is "0" at the first execution of the step 110. Therefore, after the first execution of the step 110, the program advances to the step 111 rather than the step 116.

The step 111 stores the received 1-byte data piece (a corrective data piece) into the backup memory 7. A step 112 following the step 111 adds the received 1-byte data piece to a sum value to update the latter. In order to limit the total number of bits, 8 lower bits of the sum value is made effective while the remaining higher bit or bits are disregarded. It should be noted that the sum value is previously set to "0" by the initializing process. A step 113 following the step 112 increments a count number C2 by "1". The count number C2 is used as a counter for the number of received corrective data pieces. The count number C2 is previously set to "0" by the initializing process. A step 114 following the step 113 compares the count number C2 with a given number N equal to the total number of the corrective data pieces. When the count number C2 is smaller than the given number N, the program returns from the step 114 to the step 103 of Fig. 8. When the count number C2 is equal to the given number N, the program advances from the step 114 to a step 115 which sets the flag F2 to "1".

The sequence of the steps 103, 104, 110, 111, 112, 113, and 114 is reiterated until the count number C2 reaches the given number N. When the count number C2 reaches the given number N, that is, when the reception of all the corrective data pieces has been completed, the program advances from the step 114 to the step 115 so that the flag F2 is set to "1". After the step 115, the program returns to the step 103 of Fig. 8.

The step 116 determines whether or not the value represented by the received 1-byte data piece (a check sum data piece) is equal to the sum value. When the value represented by the received 1-byte data piece is equal to the sum value, the program advances from the step 116 to a step 117. Otherwise, the program advances from the step 116 to the step 109 of Fig. 8. The step 117 stores the received 1-byte data piece (the check sum data piece) into the backup memory 7. A step 118 following the step 117 sets a flag F3 to "1". The flag F3 being "1" indicates the completion of reception of all the data pieces including the check sum data piece. On the other hand, the flag F3 being "0" indicates the non-completion of reception of all the data pieces including the check sum data piece. The flag F3 is previously set to "0" by the initializing process. A step 119 following the step 118 provides the inhibition of data reception. After the step 119, the current execution cycle of the program segment ends.

When the value represented by the received 1-byte data piece is different from the sum value, the program advances from the step 116 to the step 109 of Fig. 8. The step 109 of Fig. 8 clears the flags F1, F2, F3, and the count numbers C1 and C2 to "0". After the step 109, the program returns to the step 103. As a result, the previously-mentioned processes of receiving all the head identification data pieces, the corrective data pieces, and the check sum data piece are re-executed.

Until the flag F3 is set to "1", the CPU 14 executes control responsive to the central-value control data in the ROM 22 and does not use the corrective data in the backup memory 7. After the flag F3 is set to "1", the CPU 14 uses the corrective data in the control.

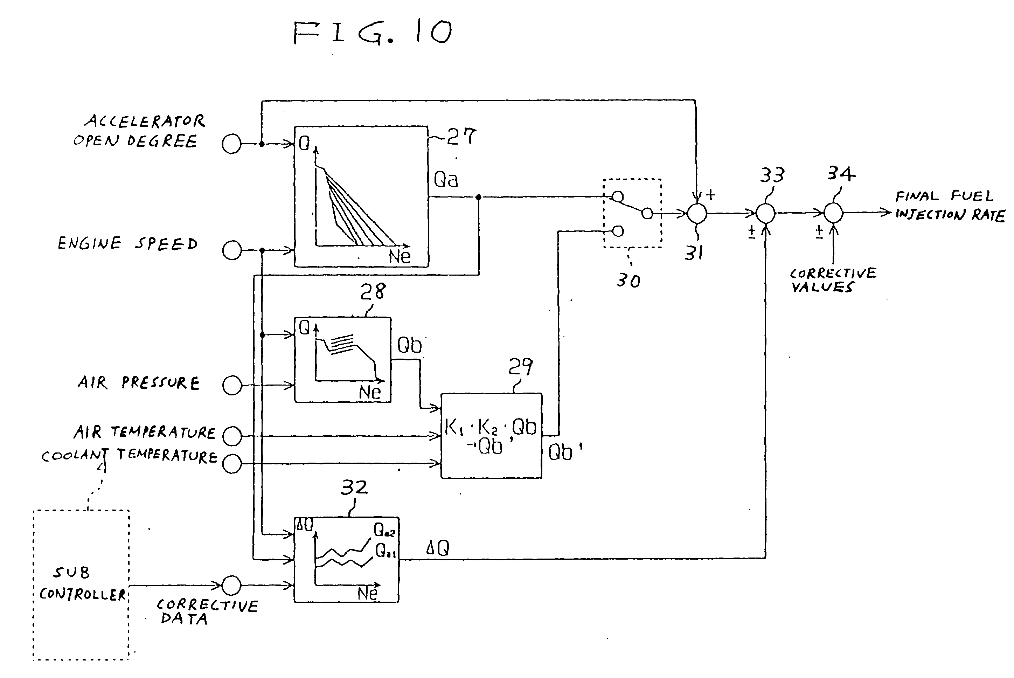

Fig. 10 shows a flow of a portion of operation of the CPU 14 within the main controller 5 which relates to fuel injection rate control (fuel injection quantity control). With reference to Fig. 10, a block 27 calculates the basic desired amount Qa of fuel injected into the diesel engine during a single fuel injection stroke from the current accelerator open degree (the current accelerator pedal position or the current degree of depression of an accelerator pedal) and the current engine speed represented by the corresponding sensor signals. The basic desired fuel injection amount Qa corresponds to a basic desired fuel injection rate (a basic desired fuel injection quantity). A block 28 calculates the basic desired maximum amount Qb of fuel injected into the diesel engine during a single fuel injection stroke from the current intake air pressure (a current intake manifold pressure) and the current engine speed represented by the corresponding sensor signals. The basic desired maximum fuel injection amount Qb corresponds to a basic desired maximum fuel injection rate (a basic desired maximum fuel injection quantity). A block 29 following the block 28 determines a corrective coefficient K1 in response to the current intake air temperature represented by the corresponding sensor signal. Also, the block 29 determines a corrective coefficient K2 in response to the current engine coolant temperature represented by the corresponding sensor signal. Further, the block 29 corrects the basic desired maximum fuel injection amount Qb into a correction-resultant basic desired maximum fuel injection amount Qb' in accordance with the corrective coefficients K1 and K2 by referring to the equation as follows.

$$Qb' = K1 \cdot K2 \cdot Qb$$

A block 30 following the blocks 27 and 29 selects smaller one of the basic desired fuel injection amount Qa and the correction-resultant basic desired maximum fuel injection amount Qb'. The desired fuel injection amount selected by the block 30 is denoted by "Qc". A block 31 following the block 30 corrects the desired fuel injection amount Qc into a desired fuel injection amount Qc' in response to the current accelerator open degree (the current accelerator pedal position or the current degree of depression of the accelerator pedal) according to an adding process. Thus, the block 31 executes acceleration-responsive correction.

A block 32 is informed of the corrective data transmitted from the sub controller 4 (see Fig. 3). The block 32 calculates a corrective value $\Delta Q$ from the corrective data, the current engine speed, and the basic desired fuel injection amount Qa. Specifically, the basic desired fuel injection amount Qa is used as a parameter in the calculation of the corrective value $\Delta Q$. A block 33 following the blocks 31 and 32 adds or subtracts the corrective value $\Delta Q$ to or from the desired fuel injection amount Qc'. Thus, the block 33 corrects the desired fuel injection amount Qc' into a desired fuel injection amount Qd in accordance with the corrective value $\Delta Q$. A block 34 following the block 33 corrects the desired fuel injection amount Qd into a final desired fuel injection amount Qe in response to various corrective values according to adding and subtracting processes. Thus, the final desired fuel injection amount Qe depends on the corrective data transmitted from the sub controller 4.

The CPU 14 within the main controller 5 uses the final desired fuel injection amount Qe as the desired fuel injection rate. The CPU 14 controls the actuator drive circuit 21 (see Fig. 3) in response to the desired fuel injection rate. The actuator drive circuit 21 generates the drive signal SG1 depending on the desired fuel injection rate. The actuator drive circuit 21 feeds the drive signal SG1 to the fuel injection rate control actuator 2 of the fuel injection pump 1 via the drive line 35 (see Fig. 3). The fuel injection rate control actuator 2 is controlled by the drive signal SG1 so that the actual fuel injection rate can agree with the desired fuel injection rate.

The CPU 14 within the main controller 5 determines the desired fuel injection timing in response to the corrective data transmitted from the sub controller 4. The CPU 14 controls the actuator drive circuit 21 in response to the desired fuel injection timing. The actuator drive circuit 21 generates the drive signal SG2 depending on the desired fuel injection timing. The actuator drive circuit 21 feeds the drive signal SG2 to the fuel injection timing control actuator 3 of the fuel injection pump 1 via the drive line 36. The fuel injection timing control actuator 3 is controlled by the drive signal SG2 so that the actual fuel injection timing can agree with the desired fuel injection timing.

The actuator drive circuit 21 converts the results of calculations by the CPU 14 into the drive signals SG1 and SG2 which are of pulse signal forms having, for example, controllable on/off timings and controllable on/off duty cycles. The response characteristics of the fuel injection rate control actuator 2 and the fuel injection timing control actuator 3 can be also corrected in response to the corrective data.

As previously described, when the main controller 5 fails to successfully receive all the head identification data pieces due to the occurrence of a malfunction, the steps 105 and 109 of Fig. 8 enable the main controller 5 to re-execute the processes of receiving all the head identification data pieces transmitted next time. Accordingly, the processes of receiving all the head identification data pieces continue to be repeated until the reception of all the head identification data pieces succeeds. Thus, all the head identification data pieces can be surely transmitted from the sub controller 4 to the main controller 5.

As previously described, the step 116 of Fig. 9 compares the transmitted check sum data piece with the calculated sum of the received corrective data pieces. When the transmitted check sum data piece disagrees with the calculated sum, the step 109 of Fig. 8 enables the main controller 5 to re-execute the processes of receiving all the head identification data pieces, the corrective data pieces, and the check sum data piece transmitted next time. Accordingly, the processes of receiving all the head identification data pieces, the corrective data pieces, and the check sum data piece continue to be repeated until the reception of all the head identification data pieces, the corrective data pieces, and the check sum data piece succeeds. Thus, all the corrective data pieces can be surely and accurately transmitted from the sub controller 4 to the main controller 5.

As understood from the previous description, the signal line L2 is used for both the transmission of electric power and the transmission of the clock signal. It should be noted that separate signal lines may be provided for the transmission of electric power and the transmission of the clock signal respectively. In this case, it is preferable that electric power is fed to the sub controller 4 before data transmission, and the feed of electric power is stopped upon the completion of data transmission. Also, it is preferable that the clock signal starts to be fed at a start of data transmission, and the feed of the clock signal is stopped upon the completion of data transmission.

It should be noted that a clock signal generator may be provided in the sub controller 4, and the serial communication between the sub controller 4 and the main controller 5 may be of an asynchronous type. In this case, it is unnecessary to transmit the clock signal to the sub controller 4. Further, the signal line L1 is used exclusively for the transmission of electric power.

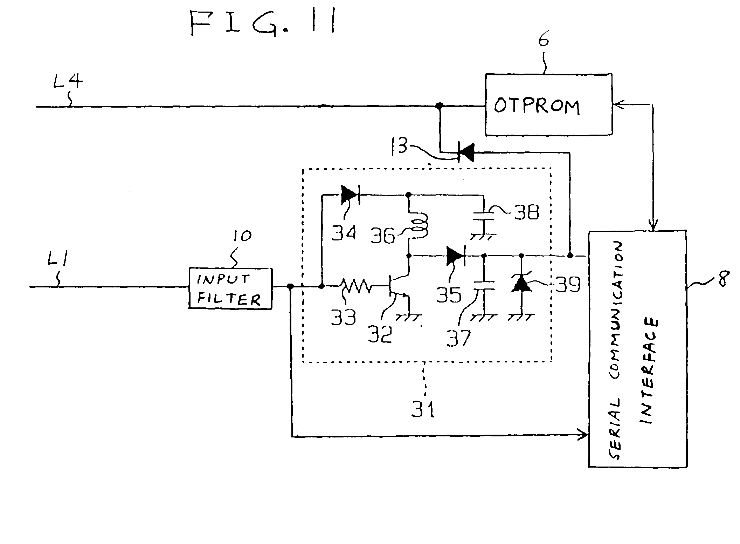

Fig. 11 shows a part of a second control system for elucidating the subject matter of the present invention, which is, however, as such not part of the present invention. The structure is similar to that shown in Figs. 3-10 except for design changes indicated hereinafter. The structure shown in Fig. 11 uses a charge pump circuit 31 instead of the capacitor 11 and the diode 12 of Fig. 3.

As shown in Fig. 11, the charge pump circuit 31 includes an NPN transistor 32, a resistor 33, diodes 34 and 35, an inductor 36, capacitors 37 and 38, and a zener diode 39. The base of the NPN transistor 32 is connected via the resistor 33 to the output terminal of an input filer 10. The emitter of the NPN transistor 32 is grounded. The collector of the NPN transistor 32 is connected to the anode of the diode 35 and a first end of the inductor 36. A second end of the inductor 36 is connected to a first end of the capacitor 38. A second end of the capacitor 38 is grounded. The anode of the diode 34 is connected to the output terminal of the input filter 10. The cathode of the diode 34 is connected to the junction between the inductor 36 and the capacitor 38. The cathode of the diode 35 is connected to a first end of the capacitor 37, the cathode of the zener diode 39, and the anode of a diode 13. A second end of the capacitor 37 is grounded. The anode of the zener diode 39 is grounded. The cathode of the diode 13 is connected to an OTPROM 6.

The charge pump circuit 31 operates in synchronism with a clock signal transmitted from a main controller 5 (see Fig. 3) via a signal line L1. The charge pump circuit 31 is effective even in given conditions, for example, conditions where the amplitude of the transmitted clock signal is relatively small with respect to an operation power supply voltage for devices or circuits within a sub controller 4.

When the transmitted clock signal is in an H level state, the NPN transistor 32 turns on and also electric energy is stored into the inductor 36. In other words, the capacitor 37 is charged and also electric energy is stored into the capacitor 38. When the transmitted clock signal falls to an L level state, a surge current is generated from the stored electric energy by the inductor 36. The capacitor 37 is charged by the surge current. Thus, the capacitor 37 is charged when the transmitted clock signal is in the L level state as well as in the H level state. Accordingly, the charge pump circuit 31 can compensate for a relatively small amplitude of the transmitted clock signal.

A first embodiment of this invention is similar to the structure shown in Figs. 3-10 except for design changes indicated hereinafter.

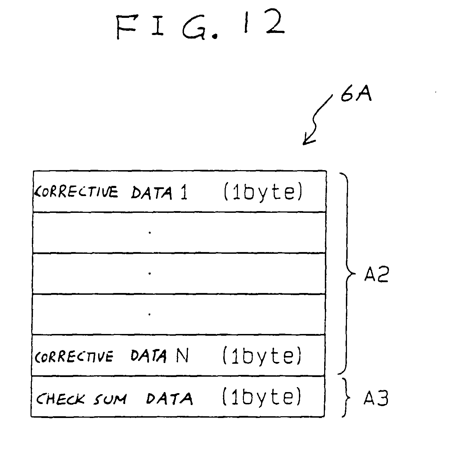

The first embodiment includes a modified OTPROM 6A. As shown in Fig. 12, the OTPROM 6A has storage areas A2 and A3. The storage area A2 holds a corrective data piece "1", a corrective data piece "2", ···, and a corrective data piece "N" each having one byte, where "N" denotes a predetermined natural number. The storage area A3 holds 1-byte check sum information (a 1-byte check sum data piece) for corrective data. In the first embodiment the corrective data piece "1", the corrective data piece "2", ···, the corrective data piece "N", and the check sum information are sequentially transmitted from the OTPROM 6A to a main controller 5 (see Fig. 3).

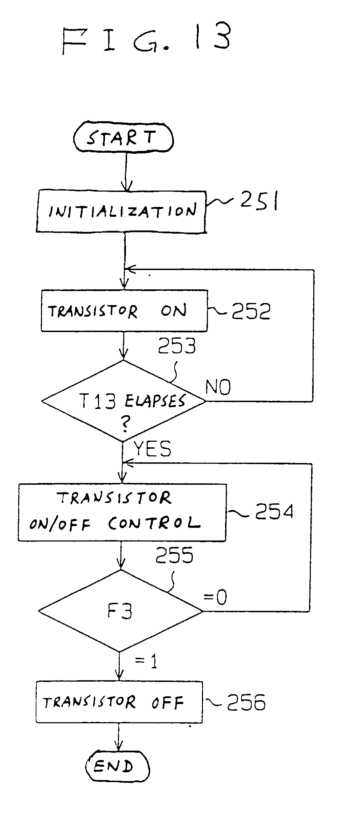

In the first embodiment, a CPU 14 (see Fig. 3) within the main controller 5 operates in accordance with a program stored in a ROM 22 (see Fig. 3) or an internal ROM. The program has various segments or routines. Fig. 13 is a flowchart of a segment of the program which relates to control of a PNP transistor 18 (see Fig. 3). The program segment of Fig. 13 is executed once in response to change of an engine key switch 24 (see Fig. 3) to its on position.

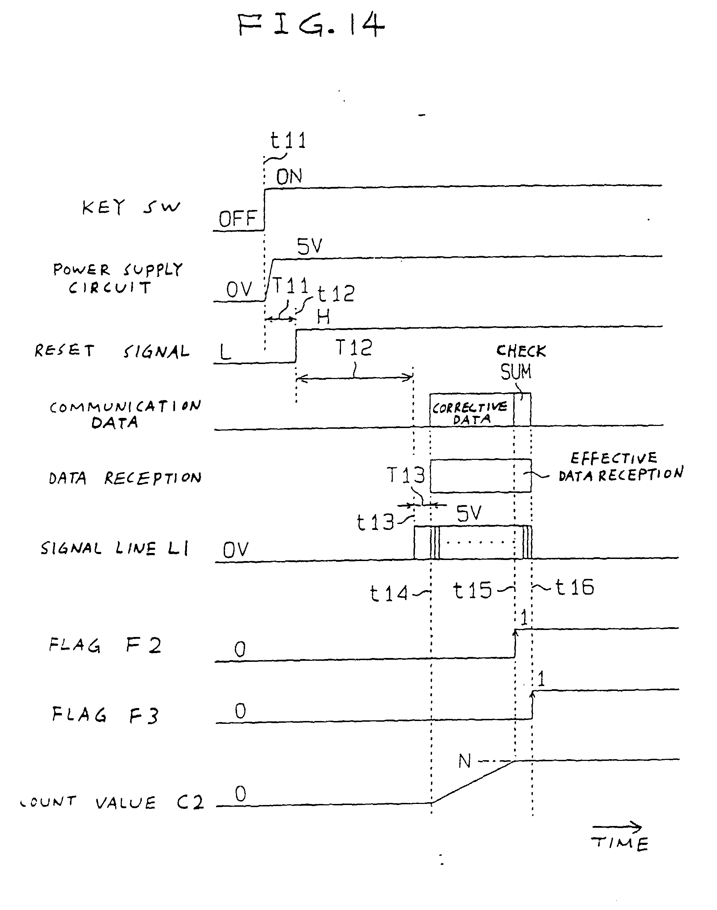

When the engine key switch 24 is changed to its on position at a moment t11 of Fig. 14, a power supply circuit 17 (see Fig. 3) starts to be fed with electric power from a battery 25 (see Fig. 3). At a moment t12 of Fig. 14 which follows the moment t11 by a time interval T11, the power supply circuit 17 outputs a reset signal (a trigger signal) to the CPU 14. The CPU-14 is started by the reset signal (the trigger signal). Accordingly, the program segment of Fig. 13 is started.

As shown in Fig. 13, a first step 251 of the program segment executes an initializing process on flags and count values related to communication. A time interval T12 in Fig. 14 corresponds to a time of the initializing process. After the step 251, the program advances to a step 252. The moment of the advance of the program from the step 251 to the step 252 corresponds to a moment t13 in Fig. 14. The step 252 turns on the PNP transistor 18. When the PNP transistor 18 is turned on, a capacitor 11 (see Fig. 3) starts to be charged by a current transmitted via the PNP transistor 18, a resistor 19, a signal line L1, an input filter 10, and a diode 12 (see Fig. 3).

A step 253 following the step 252 determines whether or not a preset time T13 has elapsed since the moment of the first execution of the step 252. In the case where the preset time T13 has not yet elapsed, the program returns from the step 253 to the step 252. In the case where the preset time T13 has elapsed, the program advances from the step 253 to a step 254. The moment at which the preset time T13 has elapsed is denoted by t14 in Fig. 14.

The step 254 periodically changes the PNP transistor 18 between its on state and its off state at a predetermined frequency. As a result, a clock signal having the predetermined frequency is transmitted from the main controller 5 to the sub controller 4 via the signal line L1. The predetermined frequency is provided by an quartz oscillator 23 (see Fig. 3) connected to the CPU 14. A step 255 following the step 254 determines whether or not a flag F3 is "0" or "1". When the flag F3 is "0", the program returns from the step 255 to the step 254. When the flag F3 is "1", the program advances from the step 255 to a step 256. The step 256 turns off the PNP transistor 18 to terminate the transmission of the clock signal to the sub controller 4. After the step 256, the execution of the program segment ends. Thus, the clock signal remains transmitted from the main controller 5 to the sub controller 4 until the flag F3 changes from "0" to "1". The transmission of the clock signal from the main controller 5 to the sub controller 4 terminates in response to the change of the flag F3 from "0" to "1". The termination of the transmission of the clock signal occurs at a moment t16 in Fig. 14.

A serial-communication interface 8 (see Fig. 3) within the sub controller 4 serves to transmit the corrective data from the OTPROM 6A to the main controller 5 via a communication buffer 9 and a signal line L2 in response to the transmitted clock signal. Specifically, the corrective data piece "1", the corrective data piece "2", ···, the corrective data piece "N", and the check sum information are sequentially transmitted from the OTPROM 6A to the main controller 5.

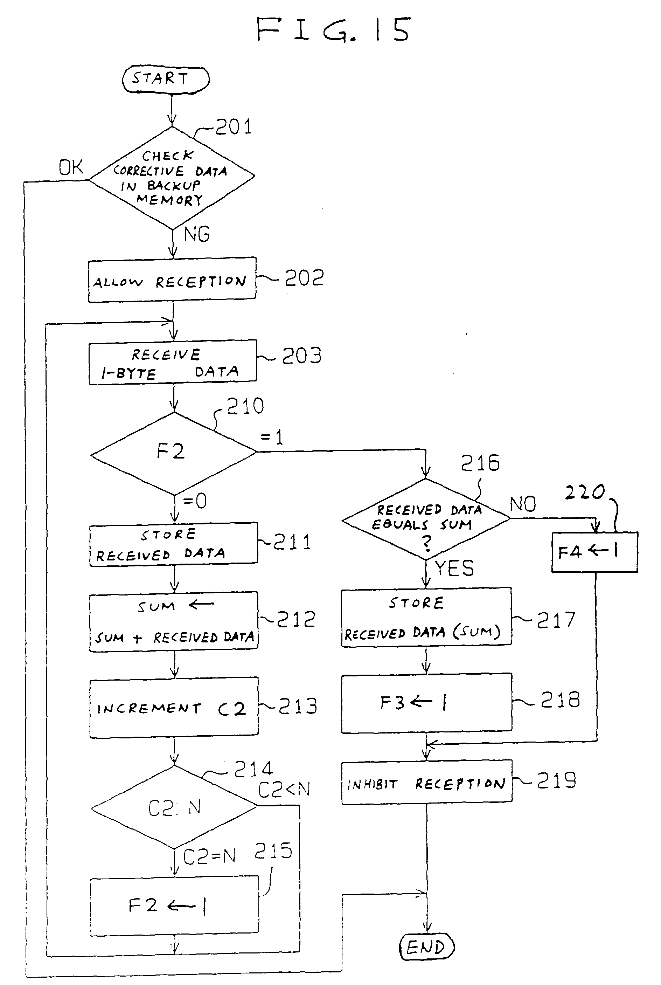

Fig. 15 is a flowchart of a segment of the program for controlling the CPU 14 within the main controller 5. The program segment of Fig. 15 relates to the serial communication between the sub controller 4 and the main controller 5. The program segment of Fig. 15 is started at a moment t14 in Fig. 14.

As shown in Fig. 15, a first step 201 of the program segment determines whether or not a check code related to data in a backup memory 7 (see Fig. 3) is normal. The check code indicates whether or not the data in the backup memory 7 is effective. The determination regarding the check code is executed by, for example, sum check or mirror check. When the check code is normal, the program exits from the step 201 and then the current execution cycle of the program segment ends. Thus, it is possible to reduce the frequency of the execution of the serial communication. When the check code is not normal, the program advances from the step 201 to a step 202.

The step 202 provides an allowance for data reception. After the step 202, the program advances to a step 203. The step 203 receives a 1-byte data piece from the sub controller 4. The step 203 may subject the received 1-byte data piece to error check related to parity, framing, or overrun.

A step 210 following the step 203 determines whether a flag F2 is "1" or "0". When the flag F2 is "0", the program advances from the step 210 to a step 211. When the flag F2 is "1", the program advances from the step 210 to a step 216. The flag F2 being "1" indicates the completion of reception of all the corrective data pieces. On the other hand, the flag F2 being "0" indicates the non-completion of reception of all the corrective data pieces. Since the flag F2 is previously set to "0" by the initializing process, the flag F2 is "0" at the first execution of the step 210. Therefore, after the first execution of the step 210, the program advances to the step 211 rather than the step 216.

The step 211 stores the received 1-byte data piece (a corrective data piece) into the backup memory 7. A step 212 following the step 211 adds the received 1-byte data piece to a sum value to update the latter. In order to limit the total number of bits, 8 lower bits of the sum value is made effective while the remaining higher bit or bits are disregarded. It should be noted that the sum value is previously set to "0" by the initializing process. A step 213 following the step 212 increments a count number C2 by "1". The count number C2 is used as a counter for the number of received corrective data pieces. The count number C2 is previously set to "0" by the initializing process. A step 214 following the step 213 compares the count number C2 with a given number N equal to the total number of the corrective data pieces. When the count number C2 is smaller than the given number N, the program returns from the step 214 to the step 203. When the count number C2 is equal to the given number N, the program advances from the step 214 to a step 215 which sets the flag F2 to "1". The moment of setting the flag F2 to "1" is denoted by t15 in Fig. 14.

The sequence of the steps 203, 210, 211, 212, 213, and 214 is reiterated until the count number C2 reaches the given number N. When the count number C2 reaches the given number N, that is, when the reception of all the corrective data pieces has been completed, the program advances from the step 214 to the step 215 so that the flag F2 is set to "1". After the step 215, the program returns to the step 203.

The step 216 determines whether or not the value represented by the received 1-byte data piece (a check sum data piece) is equal to the sum value. When the value represented by the received 1-byte data piece is equal to the sum value, the program advances from the step 216 to a step 217. Otherwise, the program advances from the step 216 to a step 220. The step 217 stores the received 1-byte data piece (the check sum data piece) into the backup memory 7. A step 218 following the step 217 sets the flag F3 to "1". The flag F3 being "1" indicates the completion of reception of all the data pieces including the check sum data piece. On the other hand, the flag F3 being "0" indicates the non-completion of reception of all the data pieces including the check sum data piece. The flag F3 is previously set to "0" by the initializing process. The moment of setting the flag F3 to "1" is denoted by t16 in Fig. 14. It should be noted that, in the program segment of Fig. 13, the program advances from the step 255 to the step 256 as a result of setting the flag F3 to "1" by the step 218 of Fig. 15. As previously described, the step 256 of Fig. 13 terminates the transmission of the clock signal to the sub controller 4. After the step 218, the program advances to a step 219. The step 219 provides the inhibition of data reception. After the step 219, the current execution cycle of the program segment ends.

The step 220 sets a flag F4 to "1". The flag F4 being "1" indicates a requirement for data retransmission. The flag F4 being "0" indicates the absence of such a retransmission requirement. After the step 220, the program advances to the step 219. During a later period, the CPU 14 within the main controller 5 transmits a data retransmission requirement to the sub controller 4 in response to the flag F4 being "1". Thus, the CPU 14 requires the sub controller 4 to retransmit the sequence of the corrective data pieces and the check sum data piece. Then, the sub controller 4 retransmits the sequence of the corrective data pieces and the check sum data piece, and the program segment of Fig. 15 is executed again in the main controller 5.

As understood from the previous description, when the transmission of all the data pieces including the check sum data piece has been successfully completed, the transmission of the clock signal from the main controller 5 to the sub controller 4 is terminated. This process is advantageous in suppressing electric power consumed by the sub controller 4 and also in limiting noise caused by the clock signal. It should be noted that head identification data pieces may be added as in the embodiment of Figs. 3-10.

A third control system for elucidating the subject matter of the present invention, which is, however, as such not part of the present invention is similar to the first embodiment of Figs. 12 -15 except for design changes indicated hereinafter.

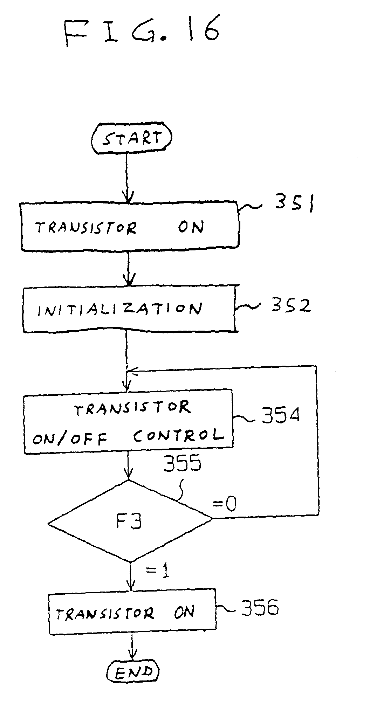

In this structure, a CPU 14 (see Fig. 3) within a main controller 5 (see Fig. 3) operates in accordance with a program stored in a ROM 22 (see Fig. 3) or an internal ROM. The program has various segments or routines. Fig. 16 is a flowchart of a segment of the program which relates to control of-a PNP transistor 18 (see Fig. 3). The program segment of Fig. 16 is executed once in response to change of an engine key switch 24 (see Fig. 3) to its on position.

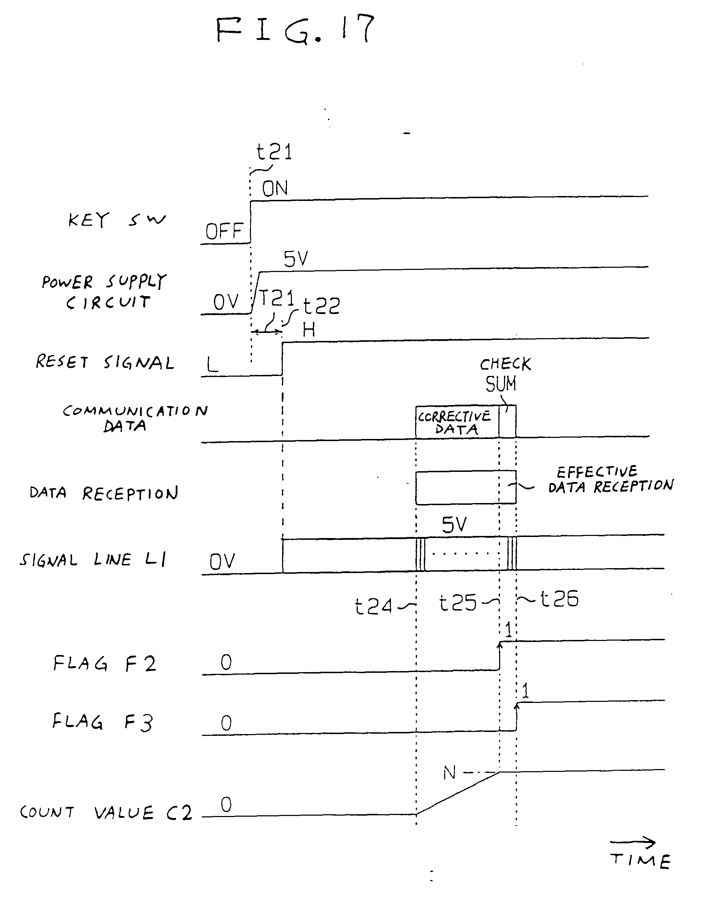

When the engine key switch 24 is changed to its on position at a moment t21 of Fig. 17, a power supply circuit 17 (see Fig. 3) starts to be fed with electric power from a battery 25 (see Fig. 3). At a moment t22 of Fig. 17 which follows the moment t21 by a time interval T21, the power supply circuit 17 outputs a reset signal (a trigger signal) to the CPU 14. The CPU 14 is started by the reset signal (the trigger signal). Accordingly, the program segment of Fig. 16 is started.

As shown in Fig. 16, a first step 351 of the program segment turns on the PNP transistor 18. When the PNP transistor 18 is turned on, a capacitor 11 (see Fig. 3) within a sub controller 4 (see Fig. 3) starts to be charged by a current transmitted via the PNP transistor 18, a resistor 19, a signal line L1, an input filter 10, and a diode 12 (see Fig. 3). A step 352 following the step 351 executes an initializing process on flags and count values related to communication. After the step 352, the program advances to a step 354. The step 354 periodically changes the PNP transistor 18 between its on state and its off state at a predetermined frequency. As a result, a clock signal having the predetermined frequency is transmitted from the main controller 5 to the sub controller 4 via the signal line L1. The predetermined frequency is provided by an quartz oscillator 23 (see Fig. 3) connected to the CPU 14. A step 355 following the step 354 determines whether or not a flag F3 is "0" or "1". When the flag F3 is "0", the program returns from the step 355 to the step 354. When the flag F3 is "1", the program advances from the step 355 to a step 356. The step 356 turns on the PNP transistor 18 to restart continuous feed of electric power to the sub controller 4. After the step 356, the execution of the program segment ends. Thus, the clock signal remains transmitted from the main controller 5 to the sub controller 4 until the flag F3 changes from "0" to "1". The transmission of the clock signal from the main controller 5 to the sub controller 4 terminates in response to the change of the flag F3 from "0" to "1". The termination of the transmission of the clock signal occurs at a moment t26 in Fig. 17.

A serial-communication interface 8 (see Fig. 3) within the sub controller 4 serves to transmit the corrective data from the OTPROM 6A to the main controller 5 via a communication buffer 9 and a signal line L2 in response to the transmitted clock signal. Specifically, the corrective data piece "1", the corrective data piece "2", ···, the corrective data piece "N", and the check sum information are sequentially transmitted from the OTPROM 6A to the main controller 5.

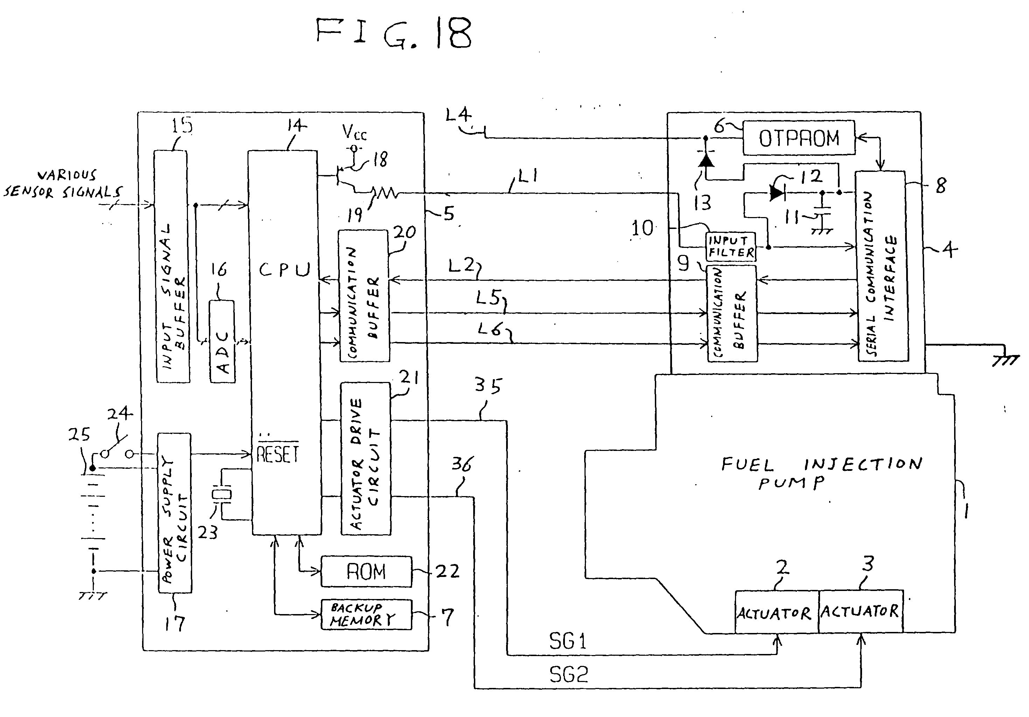

Fig. 18 shows a second embodiment of this invention which is similar to the first embodiment of Figs. 12 to 15 except for design changes indicated hereinafter. The embodiment of Fig. 18 dispenses with the signal line L3 (see Fig. 3) for providing connection between ground terminals of a sub controller 4 and a main controller 5. In the embodiment of Fig. 18, the ground terminals of the sub controller 4 and the main controller 5 are connected to each other via the body of the fuel injection pump 1.

The embodiment of Fig. 18 includes signal lines L5 and L6 extending between the sub controller 4 and the main controller 5. First ends of the signal lines L5 and L6 are connected to a serial-communication interface 8 within the sub controller 4 via a communication buffer 9. Second ends of the signal lines L5 and L6 are connected to a CPU 14 within the main controller 5 via a communication buffer 20. The signal line L5 is used for data transmission (address-added command data transmission) from the main controller 5 to the sub controller 4. The signal line L6 is used for a control-signal transmission from the main controller 5 to the sub controller 4.

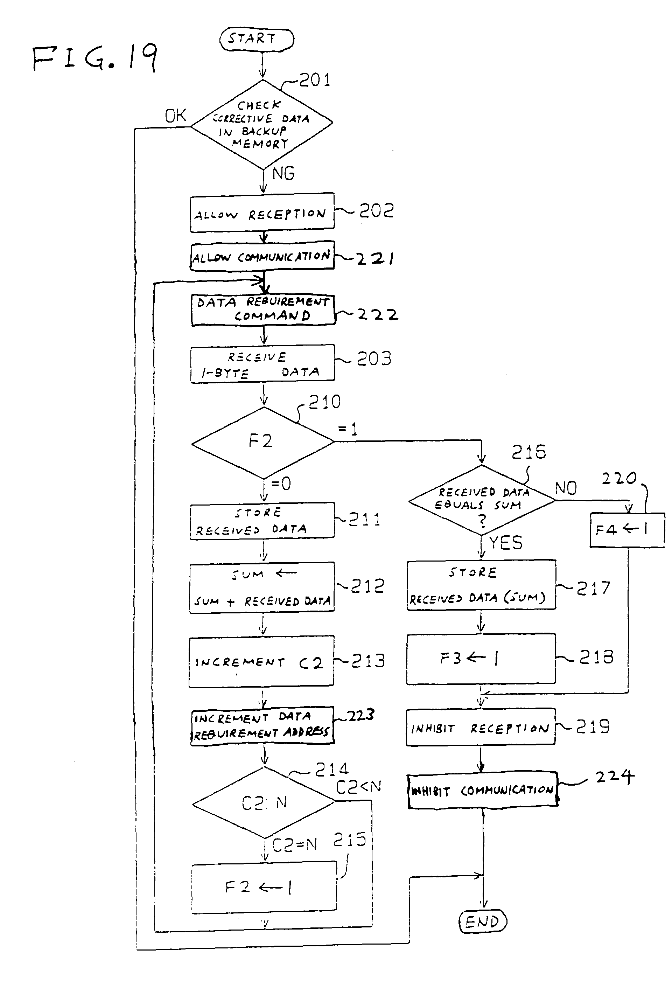

The embodiment of Fig. 18 uses a program segment of Fig. 19 instead of the program segment of Fig. 15. As shown in Fig. 19, a first step 201 of the program segment determines whether or not a check code related to data in a backup memory 7 (see Fig. 3) is normal. The check code indicates whether or not the data in the backup memory 7 is effective. The determination regarding the check code is executed by, for example, sum check or mirror check. When the check code is normal, the program exits from the step 201 and then the current execution cycle of the program segment ends. Thus, it is possible to reduce the frequency of the execution of the serial communication. When the check code is not normal, the program advances from the step 201 to a step 202.

The step 202 provides an allowance for data reception. A step 221 following the step 202 sets the signal line L6 to a communication allowance state. In other words, the step 221 transmits a control signal of communication allowance to the sub controller 4 via the signal line L6. After the step 221, the program advances to a step 222.

The step 222 transmits command data to the sub controller 4 via the signal line L5. The transmitted command data serves as a command of requiring the transmission of specific corrective data. The command data includes memory address information. Specifically, different addresses are assigned to 1-byte corrective data pieces respectively. The transmitted data represents an address of a 1-byte corrective data piece required by the CPU 14. A step 203 following the step 222 receives a 1-byte data piece from the sub controller 4. Normally, the received 1-byte data piece is equal to the required 1-byte data piece which has the address represented by the address data transmitted at the step 222. The step 203 may subject the received 1-byte data piece to error check related to parity, framing, or overrun.

A step 210 following the step 203 determines whether a flag F2 is "1" or "0". When the flag F2 is "0", the program advances from the step 210 to a step 211. When the flag F2 is "1", the program advances from the step 210 to a step 216. The flag F2 being "1" indicates the completion of reception of all the corrective data pieces. On the other hand, the flag F2 being "0" indicates the non-completion of reception of all the corrective data pieces. Since the flag F2 is previously set to "0" by the initializing process, the flag F2 is "0" at the first execution of the step 210. Therefore, after the first execution of the step 210, the program advances to the step 211 rather than the step 216.

The step 211 stores the received 1-byte data piece (a corrective data piece) into the backup memory 7. A step 212 following the step 211 adds the received 1-byte data piece to a sum value to update the latter. In order to limit the total number of bits, 8 lower bits of the sum value is made effective while the remaining higher bit or bits are disregarded. It should be noted that the sum value is previously set to "0" by the initializing process. A step 213 following the step 212 increments a count number C2 by "1". The count number C2 is used as a counter for the number of received corrective data pieces. The count number C2 is previously set to "0" by the initializing process. A step 223 following the step 213 increments or updates the address data to be transmitted to the sub controller 4. The address data is previously set to a given-address state by the initializing process. A step 214 following the step 223 compares the count number C2 with a given number N equal to the total number of the corrective data pieces. When the count number C2 is smaller than the given number N, the program returns from the step 214 to the step 222. When the count number C2 is equal to the given number N, the program advances from the step 214 to a step 215 which sets the flag F2 to "1".

The sequence of the steps 203, 210, 211, 212, 213, and 214 is reiterated until the count number C2 reaches the given number N. When the count number C2 reaches the given number N, that is, when the reception of all the corrective data pieces has been completed, the program advances from the step 214 to the step 215 so that the flag F2 is set to "1". After the step 215, the program returns to the step 222.

The step 216 determines whether or not the value represented by the received 1-byte data piece (a check sum data piece) is equal to the sum value. When the value represented by the received 1-byte data piece is equal to the sum value, the program advances from the step 216 to a step 217. Otherwise, the program advances from the step 216 to a step 220. The step 217 stores the received 1-byte data piece (the check sum data piece) into the backup memory 7. A step 218 following the step 217 sets the flag F3 to "1". The flag F3 being "1" indicates the completion of reception of all the data pieces including the check sum data piece. On the other hand, the flag F3 being "0" indicates the non-completion of reception of all the data pieces including the check sum data piece. The flag F3 is previously set to "0" by the initializing process. The moment of setting the flag F3 to "1" is denoted by t16 in Fig. 14. It should be noted that, in the program segment of Fig. 13, the program advances from the step 255 to the step 256 as a result of setting the flag F3 to "1" by the step 218 of Fig. 19. As previously described, the step 256 of Fig. 13 terminates the transmission of the clock signal to the sub controller 4. After the step 218, the program advances to a step 219. The step 219 provides the inhibition of data reception. A step 224 following the step 219 sets the signal line L6 to a communication inhibition state. In other words, the step 224 transmits a control signal of communication inhibition to the sub controller 4 via the signal line L6. After the step 224, the current execution cycle of the program segment ends.

The step 220 sets a flag F4 to "1". The flag F4 being "1" indicates a requirement for data retransmission. The flag F4 being "0" indicates the absence of such a retransmission requirement. After the step 220, the program advances to the step 219. During a later period, the CPU 14 within the main controller 5 transmits a data retransmission requirement to the sub controller 4 in response to the flag F4 being "1". Thus, the CPU 14 requires the sub controller 4 to retransmit the sequence of the corrective data pieces and the check sum data piece. Then, the sub controller 4 retransmits the sequence of the corrective data pieces and the check sum data piece, and the program segment of Fig. 19 is executed again in the main controller 5.

## Claims

1. System comprising an external control apparatus (5) and an electronic apparatus (4), wherein

    the external control apparatus (5) comprises:

        a memory (7, 22) storing data for controlling an electric actuator (2, 3);

        a serial communication interface (20) for executing serial communication with the electronic apparatus (4) in synchronism with a clock signal via a serial-communication line (L2, L3) connected between the electronic apparatus (4) and the external control apparatus (5); and

        a clock signal line (L1) for transmitting a clock pulse signal to the electronic apparatus (4), the clock pulse signal having a given voltage and being used for the execution of the serial communication,

    the clock pulse signal outputted to the electronic apparatus (4) via the clock signal line (L1) is used as a power supply for the electronic apparatus (4), and thereby the clock signal line (L1) is used also as a power supply line of the electronic apparatus (4), and

    the electronic apparatus (4) being supplied with electric power for the electronic apparatus (4) from the external control apparatus (5) before the execution of data transmission from the electronic apparatus (4) to the external control apparatus (5), wherein the supply of the electric power is terminated when the data transmission from the electronic apparatus (4) to the external control apparatus (5) ends.

2. System according to claim 1, *characterized in that* the electronic apparatus (4) comprises a memory (6) storing the data for a machine (1) provided with the electric actuator (2, 3), and a serial-communication interface (8, 9) for transmitting the data from the memory (6) to the external control apparatus (5) in synchronism with the clock signal.

3. System according to claim 1, *characterized in that* the electronic apparatus (4) further comprises means (11) for storing electric energy of the clock pulse signal, and means (12) for preventing a reverse current from the storing means (11).

4. System according to claim 1, *characterized in that* the electronic apparatus (4) further comprises means for storing electric energy of the clock pulse signal, the storing means including a capacitor (11) or a charge pump circuit (31).

5. System according to claim 1, *characterized in that* the electronic apparatus (4) further comprises means for transmitting the data from the memory (6) to the external control apparatus (5) according to the serial communication, and means for adding a head identifier to the data, and continuously transmitting a set of the head identifier and the data to the external control apparatus (5), the external control apparatus (5) accepting the data from the memory (6) after confirming reception of the head identifier.

6. System according to claim 1, *characterized in that* the electronic apparatus (4) is supplied with electric power, carried by a clock signal, for the electronic apparatus (4) from the external control apparatus (5), the clock signal being transmitted from the external control apparatus (5) to the electronic apparatus (4) via the clock signal line (L1) connected between the external control apparatus (4) and the electronic apparatus (5).

7. System according to claim 6, *characterized in that* the electronic apparatus (4) is connected to the external control apparatus (5) via the serial-communication line (L2, L3) of a synchronization type, the clock signal line (L1) containing a line which is used as both an electric power feed line and a clock feed line for serial communication of a synchronization type.

8. System according to claim 1, *characterized in that* the electronic apparatus (4) further comprises a memory (6) storing machine difference data for every machine to which the electric actuator (2, 3) is mounted, the electric actuator (2, 3) being operative for feeding fuel to an engine, the electronic apparatus (4) transmitting the machine difference data from the memory (6) to the external control apparatus (5), the external control apparatus (5) driving the electric actuator (2, 3) in response to the transmitted machine difference data and operating conditions of the engine.

9. System according to claim 8, *characterized in that* the electronic apparatus (4) is mounted on a fuel injection pump (1), the external control apparatus (5) being separate from the fuel injection pump (1), the external control apparatus (5) controlling the electric actuator (2, 3) in response to the transmitted machine difference data and signals from sensors which detect operating conditions of the engine.

10. System according to claim 1, *characterized in that* the memory (6) comprises a nonvolatile and electrically programmable memory.

11. System according to claim 10, *characterized in that* the nonvolatile and electrically programmable memory (6) comprises an OTPROM.

12. System according to claim 10, *characterized in that* the nonvolatile and electrically programmable memory (6) comprises an EEPROM.

13. System according to claim 10, *characterized in that* the nonvolatile and electrically programmable memory (6) comprises a flash memory.

**Patentansprüche**

1. System, das eine externe Steuervorrichtung (5) und eine elektronische Vorrichtung (4) aufweist, wobei

die externe Steuervorrichtung (5) aufweist:

einen Speicher (7, 22), der die Daten zum Steuern eines elektrischen Stellglieds (2, 3) speichert;

eine serielle Kommunikationsschnittstelle (20) zum Ausführen einer seriellen Kommunikation mit der elektronischen Vorrichtung (4) in Synchronismus zu einem Taktsignal über eine serielle Kommunikationsleitung (L2, L3), die zwischen der elektronischen Vorrichtung (4) und der externen Steuervorrichtung (5) angeschlossen ist; und

eine Taktsignalleitung (L1) zum Übertragen eines Taktpulssignals zu der elektronischen Vorrichtung (4), wobei das Taktpulssignal eine gegebene Spannung besitzt und für das Ausführen der seriellen Kommunikation verwendet wird,

wobei das Taktpulssignal, das über die Taktsignalleitung (L1) zu der elektronischen Vorrichtung (4) ausgeben wird, als eine Energieversorgung für die elektronische Vorrichtung (4) verwendet wird, und dadurch die Taktsignalleitung (L1) ebenso als eine Energieversorgungsleitung der elektronischen Vorrichtung (4) verwendet wird, und

die elektronische Vorrichtung (4) vor dem Ausführen einer Datenübertragung von der elektronischen Vorrichtung (4) zu der externen Steuervorrichtung (5) mit elektrischer Energie für die elektronische Vorrichtung (4) von der externen Steuervorrichtung (5) versorgt wird, wobei die Versorgung von der elektrischen Energie beendet wird, wenn die Datenübertragung von der elektronischen Vorrichtung (4) zu der externen Steuervorrichtung (5) endet.

2. System nach Anspruch 1, dadurch gekennzeichnet, daß die elektronische Vorrichtung (4) einen Speicher (6), der die Daten für eine Maschine (1) speichert, die mit dem elektrischen Stellglied (2, 3) ausgestattet ist, und eine seriellen Kommunikationsschnittstelle (8, 9) zum Übertragen der Daten von dem Speicher (6) zu der externen Steuervorrichtung (5) in Synchronismus zu dem Taktsignal aufweist.

3. System nach Anspruch 1, dadurch gekennzeichnet, daß die elektronische Vorrichtung (4) weiterhin Einrichtungen (11) zum Speichern von elektrischer Energie des Taktpulssignals, und eine Einrichtung (12) zum Verhindern eines rückwärts gerichteten Stroms von der Speichereinrichtung (11) aufweist.

4. System nach Anspruch 1, dadurch gekennzeichnet, daß die elektronische Vorrichtung (4) weiterhin eine Einrichtung (11) zum Speichern von elektrischer Energie des Taktpulssignals aufweist, wobei die Speichereinrichtung eine Kapazität (11) oder eine Ladungspumpschaltung (31) beinhaltet.

5. System nach Anspruch 1, dadurch gekennzeichnet, daß die elektronische Vorrichtung (4) weiterhin eine Einrichtung (11) zum Übertragen der Daten von dem Speicher (6) zu der externen Steuervorrichtung (5) gemäß der seriellen Kommunikation, und eine Einrichtung zum Addieren des Kopf-Identifizierers zu den Daten und zum kontinuierlichen Übertragen eines Satzes des Kopf-Identifizierers und der Daten zu der externen Steuervorrichtung (5) aufweist, wobei die externe Steuervorrichtung (5) die Daten von dem Speicher (6) nach Bestätigen des Empfangs des Kopf-Identifizierer annimmt.

6. System nach Anspruch 1, dadurch gekennzeichnet, daß die elektronische Vorrichtung (4) mit von dem Taktsignal übertragener elektrischer Energie für die elektronische Vorrichtung (4) von der externen Steuervorrichtung (5) versorgt wird, wobei das Taktsignal von der externen Steuerung zu der elektronischen Steuervorrichtung (5) über die Taktsignalleitung (L1) übertragen wird, die zwischen der externen Steuervorrichtung (4) und der elektronischen Vorrichtung (5) angeschlossen ist.

7. System nach Anspruch 6, dadurch gekennzeichnet, daß die elektronische Vorrichtung (4) mit der externen Steuervorrichtung (5) über die serielle Kommunikationsleitung (L2, L3) eines synchronen Typs verbunden ist, wobei die Taktsignalleitung (L1) eine Leitung enthält, welche sowohl als eine elektrische Energieversorgungsleitung als auch als eine Taktversorgungsleitung für eine serielle Kommunikation eines synchronen Typs verwendet wird.

8. System nach Anspruch 1, dadurch gekennzeichnet, daß die elektronische Vorrichtung (4) weiterhin einen Speicher (6) aufweist, der Maschinenunterschiedsdaten für jede Maschine speichert, an welcher das elektrische Stellglied (2, 3) befestigt ist, wobei das elektrische Stellglied (2, 3) derart arbeitet, daß es den Motor mit Kraftstoff versorgt, wobei die elektronische Vorrichtung (4) die Maschinenunterschiedsdaten von dem Speicher (6) zu der externen Steuervorrichtung (5) überträgt, wobei die externe Steuervorrichtung (5) das elektrische Stellglied (2, 3) als Reaktion auf die übertragenen Maschinenunterschiedsdaten und Betriebsbedingungen des Motors ansteuert.

9. System nach Anspruch 8, dadurch gekennzeichnet, daß die elektronische Vorrichtung (4) auf einer Kraftstoffeinspritzpumpe (1) befestigt ist, wobei die externe Steuervorrichtung (5) von der Kraftstoffeinspritzpumpe (1) getrennt ist, wobei die externe Steuervorrichtung (5) das elektrische Stellglied (2, 3) als Reaktion auf die übertragenen Maschinenunterschieddaten und Signale von Sensoren steuert, welche Betriebsbedingungen des Motor erfassen.

10. System nach Anspruch 1, dadurch gekennzeichnet, daß der Speicher (6) einen nichtflüchtigen und elektrisch programmierbaren Speicher aufweist.

11. System nach Anspruch 10, dadurch gekennzeichnet, daß der nichtflüchtige und elektrisch programmierbare Speicher (6) einen OTPROM aufweist.

12. System nach Anspruch 10, dadurch gekennzeichnet, daß der nichtflüchtige und elektrisch programmierbare Speicher (6) einen EEPROM aufweist.

**13.** System nach Anspruch 10, dadurch gekennzeichnet, daß der nichtflüchtige und elektrisch programmierbare Speicher (6) einen Flash-Speicher aufweist.

## Revendications

**1.** Système comprenant un appareil de commande externe (5) et un appareil électronique (4), dans lequel

l'appareil de commande externe (5) comprend :

une mémoire (7, 22) mémorisant des données pour commander un actionneur électrique (2, 3) ;
une interface de communication série (20) pour exécuter une communication série avec l'appareil électronique (4) en synchronisation avec un signal d'horloge via une ligne de communication série (L2, L3) connectée entre l'appareil électronique (4) et l'appareil de commande externe (5) ; et
une ligne de signal d'horloge (L1) pour transmettre un signal à impulsion d'horloge à l'appareil électronique (4), le signal à impulsion d'horloge présentant une tension donnée et étant utilisé pour l'exécution de la communication série,

le signal à impulsion d'horloge généré vers l'appareil électronique (4) via la ligne de signal d'horloge (L1) est utilisé en tant qu'alimentation pour l'appareil électronique (4) et, de ce fait, la ligne du signal d'horloge (L1) est également utilisée comme une ligne d'alimentation de l'appareil électronique (4), et
l'appareil électronique (4) étant alimenté en puissance électrique pour l'appareil électronique (4) à partir de l'appareil de commande externe (5) avant l'exécution de la transmission de données de l'appareil électronique (4) à l'appareil de commande externe (5), dans lequel l'alimentation de la puissance électrique est terminée lorsque la transmission de données de l'appareil électronique (4) à l'appareil de commande externe (5) se termine.

**2.** Système selon la revendication 1, *caractérisé en ce que* l'appareil électronique (4) comprend une mémoire (6) mémorisant les données pour une machine (1) munie de l'actionneur électrique (2, 3), et d'une interface de communication série (8, 9) pour transmettre les données de la mémoire (6) à l'appareil de commande externe (5) en synchronisation avec le signal d'horloge.

**3.** Système selon la revendication 1, *caractérisé en ce*

*que* l'appareil électronique (4) comprend en outre un moyen (11) pour mémoriser l'énergie électrique du signal à impulsion d'horloge, et un moyen (12) pour empêcher un courant inverse provenant du moyen de mémorisation (11).

**4.** Système selon la revendication 1, *caractérisé en ce que* l'appareil électronique (4) comprend en outre un moyen pour mémoriser l'énergie électrique du signal à impulsion d'horloge, le moyen de mémorisation incluant un condensateur (11) ou un circuit de pompe de charge (31).

**5.** Système selon la revendication 1, *caractérisé en ce que* l'appareil électronique (4) comprend en outre un moyen pour transmettre les données de la mémoire (6) à l'appareil de commande externe (5) conformément à la communication série, et un moyen pour ajouter un identificateur de tête aux données, et pour transmettre continuellement un ensemble d'identificateurs de tête et les données à l'appareil de commande externe (5), l'appareil de commande externe (5) acceptant les données de la mémoire (6) après confirmation de réception de l'identificateur de tête.

**6.** Système selon la revendication 1, *caractérisé en ce que* l'appareil électronique (4) est alimenté en puissance électrique, amenée par un signal d'horloge, pour l'appareil électronique (4) de l'appareil de commande externe (5), le signal d'horloge étant transmis de l'appareil de commande externe (5) à l'appareil électronique (4) via la ligne de signal d'horloge (L1) connectée entre l'appareil de commande externe (4) et l'appareil électronique (5).

**7.** Système de commande selon la revendication 6, *caractérisé en ce que* l'appareil électronique (4) est connecté à l'appareil de commande externe (5) via la ligne de communication série (L2, L3) d'un type de synchronisation, la ligne de signal d'horloge (L1) contenant une ligne qui est utilisée à la fois comme une ligne d'alimentation de puissance électrique et une ligne d'alimentation d'horloge pour une communication série de type synchronisé.

**8.** Système selon la revendication 1, *caractérisé en ce que* l'appareil électronique (4) comprend en outre une mémoire (6) mémorisant les données de différence de machine pour chaque machine sur laquelle l'actionneur électrique (2, 3) est monté, l'actionneur électronique (2, 3) étant opérationnel pour alimenter du carburant à un moteur, l'appareil électronique (4) transmettant les données de différence de machine provenant de la mémoire (6) à l'appareil de commande externe (5), l'appareil de commande externe (5) attaquant l'actionneur électrique (2, 3) en réponse aux données de différence de machine transmises et aux conditions de fonctionnement du moteur.

9. Système selon la revendication 8, *caractérisé en ce que* l'appareil électronique (4) est monté sur une pompe d'injection de carburant (1), l'appareil de commande externe (5) étant séparé de la pompe d'injection de carburant (1), l'appareil de commande externe (5) commandant l'actionneur électrique (2, 3) en réponse aux données de différence de machine transmises et aux signaux provenant des capteurs qui détectent les conditions de fonctionnement du moteur.

10. Système selon la revendication 1, *caractérisé en ce que* la mémoire (6) comprend une mémoire programmable électriquement non volatile.

11. Système selon la revendication 10, *caractérisé en ce que* la mémoire programmable non volatile électriquement (6) comprend une OTPROM.

12. Système selon la revendication 10, *caractérisé en ce que* la mémoire programmable non volatile électriquement (6) comprend une EEPROM.

13. Système selon la revendication 10, *caractérisé en ce que* la mémoire programmable non volatile électriquement (6) comprend une mémoire flash.

FIG. 1

EP 0 716 223 B1

FIG. 2

FIG. 3

# F I G. 4

6

| | |
|---|---|
| HEAD ID DATA 1 (1byte) | |
| . | |
| . | A1 |
| . | |
| HEAD ID DATA M (1byte) | |
| CORRECTIVE DATA 1 (1byte) | |
| . | |
| . | A2 |
| . | |
| CORRECTIVE DATA N (1byte) | |
| CHECK SUM DATA (1byte) | A3 |

F I G. 5

```
        ( START )
            │
            ▼ ◄──────────────┐
   ┌─────────────────┐       │
   │ TRANSISTOR  ON  │ ~151  │
   └─────────────────┘       │
            │     152        │
            ▼                │
         ╱────────╲     NO   │
        ╱  T2 ELAPSES╲───────┘
        ╲     ?      ╱
         ╲────────╱
            │ YES
            ▼
   ┌─────────────────┐
   │   TRANSISTOR    │ ~153
   │ ON/OFF CONTROL  │
   └─────────────────┘
            │
            ▼
         ( END )
```

# F I G. 6

# F I G. 7

CLOCK SIGNAL

H

L

T (COMMUNICATION CLOCK PERIOD)

VOLTAGE ACROSS CAPACITOR

VOLT

$\Delta V$

$V_{cc}$

0 (GROUND LEVEL)

$\longrightarrow$ TIME

# FIG. 8

```
                    ┌─────────┐
                    │  START  │
                    └─────────┘
                         │
                         ▼
                      ╱─101─╲
                   ╱           ╲
                 ╱   CHECK       ╲          OK
                │ CORRECTIVE DATA  │─────────────────────┐
                 ╲  IN BACKUP     ╱                       │
                   ╲  MEMORY    ╱                         │
                      ╲      ╱                            ▼
                         │NG                          ┌──────┐
                         ▼                            │ END  │
              ┌──────────────────┐                   └──────┘
              │ ALLOW RECEPTION  │── 102
              └──────────────────┘
                         │
        ②───────────────▶│◀──────────────────────────────────┐
                         ▼                                     │
              ┌──────────────────┐                            │
              │    RECEIVE       │── 103                      │
              │  1-BYTE  DATA    │                            │
              └──────────────────┘                            │
                         │                                     │
                         ▼                                     │
                      ╱─104─╲         =1                       │
                   ╱          ╲──────────────────▶ ①          │
                  │    F1      │                               │
                   ╲          ╱                                │
                      ╲    ╱                                   │
                         │=0                                   │
                         ▼                                     │
                      ╱─105─╲         YES                      │
                   ╱          ╲──────────────┐                │
                  │ RECEIVED DATA │           │               │
                  │  IS HEAD ID   │           ▼               │
                   ╲   DATA ?   ╱      ┌──────────────┐       │
     ③────────────▶  ╲      ╱  NO      │              │ 106   │
                         │─────┐       │ INCREMENT C1 │       │
                         ▼     │109    └──────────────┘       │
              ┌──────────────────┐            │               │
              │     CLEAR        │            ▼               │
              │  F1, F2, F3      │         ╱─107─╲   C1<M     │
              │   C1, C2         │      ╱          ╲──────────▶│
              │                  │     │    C1: M   │          │
              │                  │      ╲          ╱           │
              │                  │         ╲    ╱              │
              │                  │           │C1=M             │
              │                  │           ▼                 │
              │                  │    ┌──────────────┐ 108     │
              └──────────────────┘    │    F1 ← 1    │         │
                         │            └──────────────┘         │
                         │                   │                 │
                         └───────────────────┴─────────────────┘
```

# F I G. 9

# FIG. 10

ACCELERATOR OPEN DEGREE

ENGINE SPEED

AIR PRESSURE

AIR TEMPERATURE

COOLANT TEMPERATURE

SUB CONTROLLER

CORRECTIVE DATA

27

Qa

28

Qb

29

$K_1 \cdot K_2 \cdot Qb$
$- Qb'$

Qb'

32

$Q_{a2}$
$Q_{a1}$

ΔQ

30

31

33

34

FINAL FUEL INJECTION RATE

CORRECTIVE VALUES

EP 0 716 223 B1

FIG. 11

# F I G. 12

6A

| | |
|---|---|
| CORRECTIVE DATA 1 (1byte) | |
| . | |
| . | A2 |
| . | |
| CORRECTIVE DATA N (1byte) | |
| CHECK SUM DATA (1byte) | A3 |

# F I G. 13

```
                    ( START )
                        |
                        v
            +------------------------+
            |    INITIALIZATION      |~ 251
            +------------------------+
                        |
                        v ----------------------+
            +------------------------+          |
            |    TRANSISTOR   ON     |~ 252     |
            +------------------------+          |
                        |    253               |
                        v    /                 |
                       / \                      |
                      /   \     NO              |
                     / T13  \--------------------+
                     \ELAPSES/
                      \  ?  /
                       \ /
                        | YES
                        v ----------------------+
            +------------------------+          |
            |    TRANSISTOR          |          |
            |  ON/OFF CONTROL        |~ 254     |
            +------------------------+          |
                        |    255               |
                        v    /                 |
                       / \                      |
                      /   \     =0              |
                     / F3  \--------------------+
                      \   /
                       \ /
                        | = 1
                        v
            +------------------------+
            |    TRANSISTOR  OFF     |~ 256
            +------------------------+
                        |
                        v
                    ( END )
```

# FIG.14

# FIG. 15

FIG. 16

```
        ┌─────────┐
        │  START  │
        └────┬────┘
             │
             ▼
  ┌─────────────────────┐
  │  TRANSISTOR    ON   │──── 351
  └──────────┬──────────┘
             │
             ▼
  ┌─────────────────────┐
  │   INITIALIZATION    │──── 352
  └──────────┬──────────┘
             │
             ▼  ◄─────────────────┐
  ┌─────────────────────┐         │
  │     TRANSISTOR       │── 354   │
  │  ON/OFF   CONTROL    │         │
  └──────────┬──────────┘         │
             │    355             │
             ▼                    │
          ╱─────╲       =0        │
         ╱       ╲────────────────┘
        ╱   F3    ╲
         ╲       ╱
          ╲─────╱
             │ = 1
             ▼
  ┌─────────────────────┐
  │  TRANSISTOR   ON    │──── 356
  └──────────┬──────────┘
             │
             ▼
        ┌─────────┐
        │   END   │
        └─────────┘
```

F I G. 17

# FIG. 18

FIG. 19

START

CHECK CORRECTIVE DATA IN BACKUP MEMORY — 201

OK

NG

ALLOW RECEPTION — 202

ALLOW COMMUNICATION — 221

DATA REQUIREMENT COMMAND — 222

RECEIVE 1-BYTE DATA — 203

F2 — 210

= 1

= 0

STORE RECEIVED DATA — 211

SUM ← SUM + RECEIVED DATA — 212

INCREMENT C2 — 213

INCREMENT DATA REQUIREMENT ADDRESS — 223

C2 : N — 214

C2<N

C2=N 215

F2 ← 1

RECEIVED DATA EQUALS SUM ? — 215

NO — 220

YES

F4 ← 1

STORE RECEIVED DATA (SUM) — 217

F3 ← 1 — 218

INHIBIT RECEPTION — 219

INHIBIT COMMUNICATION — 224

END